# EUROPEAN PATENT APPLICATION

(11) **EP 4 451 773 A1**
(43) Date of publication of application: **23.10.2024**
(21) Application number: 23745872.4
(22) Date of filing: 09.01.2023
(51) Int. Cl.: H04W 72/04, H04W 36/00

(54) **COMMUNICATION METHOD AND APPARATUS**

(30) Priority: 30.01.2022 CN 202210114393
(71) Applicant: Huawei Technologies Co., Ltd., Shenzhen, Guangdong 518129 (CN)
(72) Inventor: SHA, Tong, Shenzhen, Guangdong 518129 (CN); CHANG, Junren, Shenzhen, Guangdong 518129 (CN); WANG, Jianlin, Shenzhen, Guangdong 518129 (CN); ZHANG, Chao, Shenzhen, Guangdong 518129 (CN)
(74) Representative: MERH-IP Matias Erny Reichl Hoffmann Patentanwälte PartG mbB
(86) International application number: PCT/CN2023/071192
(87) International publication number: WO 2023/142987

(57) **Abstract**

This application provides a communication method and apparatus, to implement communication of a terminal device that supports a plurality of user identities. The method may be applied to a terminal device that supports a first communication system and a second communication system. The first communication system corresponds to a first user identity, and the second communication system corresponds to a second user identity. The method includes: A terminal device receives a first message in a first communication system, where the first message indicates to perform DAPS handover between a source cell and a target cell in the first communication system. If determining that a capability available for the first communication system cannot support the DAPS handover, the terminal device suspends communication with the source cell in the first communication system, and is handed over to the target cell in the first communication system. A capability of the terminal device is used for communication in the first communication system and a second communication system. The DAPS handover in the first communication system is rolled back to basic handover, so that the terminal device can implement communication of a plurality of communication systems within a capability range.

## Description

### CROSS-REFERENCE TO RELATED APPLICATIONS

This application claims priority to Chinese Patent Application No. 202210114393.3, filed with the China National Intellectual Property Administration on January 30, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

When registering with a network device, a terminal device reports a capability of the terminal device to the network device, and the network device determines, based on the capability of the terminal device, how to configure and schedule the terminal device. For a terminal device that supports a plurality of user identities, for example, a terminal device having two cards that supports two subscriber identity modules (Subscriber Identity module, SIM) in the terminal device, the terminal device supports communication in two communication systems. The two communication systems may respectively correspond to a first user identity and a second user identity. Hardware resources of the terminal device are shared by the two user identities, and a capability of the terminal device is used for communication in the two communication systems.

If a communication behavior of the terminal device in one communication system occupies a part of the capability of the terminal device, and the terminal device receives a dual active protocol stack (dual active protocol stack, DAPS) handover command in the other communication system, during execution of DAPS handover, the terminal device maintains user plane connections to both a source cell and a target cell, and continues to transmit data with the source cell. However, in this case, communication behaviors of the terminal device in the two communication systems may exceed the capability of the terminal device, and consequently normal communication cannot be performed. Therefore, for the terminal device that supports the plurality of user identities, how to perform communication becomes an urgent technical problem to be resolved.

### SUMMARY

This application provides a communication method and apparatus, to implement communication of a terminal device that supports a plurality of user identities.

According to a first aspect, this application provides a communication method. The method may be performed by a terminal device, or may be performed by a chip or a circuit in the terminal device. The method includes: A terminal device receives a first message in a first communication system, where the first message indicates the terminal device to perform DAPS handover between a source cell and a target cell in the first communication system. The terminal device determines that a capability available for the first communication system cannot support the DAPS handover, where a capability of the terminal device is used for communication in the first communication system and a second communication system, the first communication system corresponds to a first user identity, and the second communication system corresponds to a second user identity. The terminal device suspends communication with the source cell in the first communication system, and is handed over to the target cell in the first communication system.

In this embodiment of this application, when the DAPS handover of the terminal device in the first communication system and a communication behavior of the terminal device in another communication system exceed the capability of the terminal device, communication with the source cell in the first communication system is suspended, so that the DAPS handover in the first communication system can be rolled back to basic handover. Therefore, the terminal device can be handed over to the target cell in the first communication system without affecting communication of the terminal device in the another communication system. In this manner, first, it may be avoided that, after the terminal device receives an RRC reconfiguration message of a DAPS handover command in the first communication system, RRC re-establishment is triggered because the terminal device determines that a network configuration exceeds the capability of the terminal device, and consequently a service currently being performed in the first communication system is interrupted, thereby affecting user experience of the terminal device in the first communication system as a first user identity; second, it may also be avoided that the terminal device interrupts communication in the another communication system to perform the DAPS handover in the first communication system, thereby affecting user experience of the terminal device in the second communication system as a second user identity; and third, the terminal device may be further handed over, by rolling back to the basic handover, to a target cell with better signal quality in the first communication system in a timely manner, to avoid that communication quality of the first communication system is affected because the terminal device stays in a source cell with poor signal quality for a long time in the first communication system. When the terminal device receives the RRC reconfiguration message of the DAPS handover command but cannot perform the DAPS handover, the terminal device is handed over to a target cell with better signal quality according to a basic handover procedure, so that communication performance in the first communication system can be improved.

In a possible design, that the terminal device determines that a capability available for the first communication system cannot support the DAPS handover includes: The terminal device determines that a carrier aggregation capability and/or a dual-connectivity capability that are available for the first communication system cannot support the DAPS handover.

In a possible design, the first message carries configuration information of N radio bearers, the configuration information of the N radio bearers carries DAPS configurations, and N is an integer greater than 0. The method further includes: skipping configuring the N radio bearers as DAPS bearers.

In the foregoing manner, the terminal device can perform cell handover in the first communication system based on the basic handover, so that communication of the terminal device in the second communication system and communication of the terminal device in the first communication system are maintained within a capability range of the terminal device, or it is ensured that resources used by the terminal device during communication in the first communication system and the second communication system do not exceed a hardware resource of the terminal device, thereby avoiding communication interruption.

In a possible design, that the terminal device suspends communication with the source cell in the first communication system includes: The terminal device releases a radio resource control (radio resource control, RRC) connection to the source cell; the terminal device suspends transmission and reception of a data radio bearer (data radio bearer, DRB) in a source primary cell group; and/or the terminal device determines that a radio link failure occurs in a source primary cell or the source primary cell group in the first communication system. According to the foregoing design, the terminal device can roll back to the basic handover, so that the terminal device can be handed over to the target cell in the first communication system within the capability range of the terminal device.

In a possible design, the method further includes: If the terminal device successfully accesses the target cell, the terminal device sends first information to the target cell, where the first information indicates that the terminal device suspends communication with the source cell due to a resource conflict. This manner may help a network device optimize network mobility, for example, optimize settings of mobility-related parameters, such as timer duration related to a handover process, and a cell signal quality threshold in a cell selection/reselection process. A specific optimization parameter and a value of the parameter are not limited in this embodiment.

In a possible design, the method further includes: The terminal device sends indication information to the source cell in the first communication system, where the indication information indicates that communication with the source cell has been suspended or is about to be suspended. In the foregoing design, the network device is indicated that communication with the source cell is suspended or is about to be suspended, so that the network device can stop scheduling the terminal device by the source cell, thereby avoiding a waste of resources.

According to a second aspect, this application provides a communication method. The method may be performed by a network device, or may be performed by a chip or a circuit in the network device. The method includes: A first network device sends a first message to a terminal device, where the first message indicates the terminal device to perform DAPS handover between a source cell and a target cell, and the source cell belongs to the first network device. The first network device receives first indication information from the terminal device, where the first indication information indicates that communication with the source cell has been suspended or is about to be suspended. The first network device stops data scheduling performed on the terminal device in the source cell.

In this embodiment of this application, when the DAPS handover of the terminal device in the first communication system and a communication behavior of the terminal device in another communication system exceed the capability of the terminal device, communication with the source cell in the first communication system is suspended, so that the DAPS handover in the first communication system can be rolled back to basic handover. Therefore, the terminal device can be handed over to the target cell in the first communication system without affecting communication of the terminal device in the another communication system. In this manner, first, it may be avoided that, after the terminal device receives an RRC reconfiguration message of a DAPS handover command in the first communication system, RRC re-establishment is triggered because the terminal device determines that a network configuration exceeds the capability of the terminal device, and consequently a service currently being performed in the first communication system is interrupted, thereby affecting user experience of the terminal device in the first communication system as a first user identity; second, it may also be avoided that the terminal device interrupts communication in the another communication system to perform the DAPS handover in the first communication system, thereby affecting user experience of the terminal device in the second communication system as a second user identity; and third, the terminal device may be further handed over, by rolling back to the basic handover, to a target cell with better signal quality in the first communication system in a timely manner, to avoid that communication quality of the first communication system is affected because the terminal device stays in a source cell with poor signal quality for a long time in the first communication system. When the terminal device receives the RRC reconfiguration message of the DAPS handover command but cannot perform the DAPS handover, the terminal device is handed over to a target cell with better signal quality according to a basic handover procedure, so that communication performance in the first communication system can be improved.

In a possible design, the first network device sends second indication information to a second network device, where the second indication information indicates that the terminal device has suspended or is about to suspend communication with and the source cell, and the target cell belongs to the second network device. According to the foregoing description, the target cell can determine that the terminal device rolls back to the basic handover in the first communication system, thereby avoiding an error that occurs when the target cell communicates with the terminal device based on a DAPS handover mechanism.

In a possible design, the second indication information is sent to the second network device through a sequence number status transfer message. In the foregoing manner, an implicit indication manner is used to indicate that communication with the source cell has been suspended or is about to be suspended, so that signaling overheads can be reduced.

According to a third aspect, this application provides a communication method. The method may be performed by a terminal device, or may be performed by a chip or a circuit in the terminal device. The method includes: A terminal device determines that a first event occurs. The terminal device sends indication information in a first communication system, where the indication information is used to update a DAPS capability of the terminal device in the first communication system, and the indication information is effective for any band combination of the terminal device, or the indication information is effective for a first band in a first band combination. The terminal device supports communication in the first communication system and a second communication system, the first communication system corresponds to a first user identity, and the second communication system corresponds to a second user identity.

In this embodiment of this application, the DAPS capability of the terminal device is indicated to be updated, so that a network device can indicate, based on an updated DAPS capability, the terminal device to perform handover, thereby avoiding a case in which the DAPS handover that the network device determines to perform for the terminal device exceeds a capability of the terminal device. In addition, in this embodiment of this application, the indication information may be effective for the terminal device, so that signaling overheads can be reduced. Alternatively, in this embodiment of this application, the indication information may be effective for one or more bands in the band combination, so that flexibility of updating the DAPS capability can be improved.

In a possible design, the indication information further indicates that the indication information is effective for intra-frequency DAPS handover and/or for inter-frequency DAPS handover. According to the foregoing design, the intra-frequency DAPS handover and the inter-frequency DAPS handover can be flexibly updated.

In a possible design, the indication information indicates to suspend the DAPS capability in the first communication system; and the first event is that the terminal device enters an RRC connected state in both the first communication system and the second communication system; the first event is that a version of a network protocol of the first communication system and a version of a network protocol of the second communication system each are not earlier than a version of a 5G protocol; or the first event is that an RRC configuration in the first communication system and an RRC configuration in the second communication system exceed a baseband capability and/or a radio frequency capability of the terminal device. According to the foregoing design, when a capability that is of the terminal device and that is available for the first communication system is insufficient, the DAPS capability of the terminal device in the first communication system may be suspended, so that the terminal device can be handed over to a target cell, and communication quality of the terminal device in the first communication system is ensured.

In a possible design, the indication information indicates to resume the DAPS capability in the first communication system; and the first event is that the terminal device leaves an RRC connected state in the first communication system and/or the second communication system; the first event is that a version of a network protocol of the first communication system and/or a version of a network protocol of the second communication system are/is earlier than a version of a 5G protocol; or the first event is that a capability available for the first communication system supports DAPS handover between a source cell and a target cell in the first communication system. According to the foregoing design, when the capability that is of the terminal device and that is available for the first communication system is sufficient, the DAPS capability of the terminal device in the first communication system can be resumed, so that the terminal device performs DAPS handover in the first communication system, thereby reducing a communication latency of the terminal device in the first communication system.

According to a fourth aspect, this application provides a communication method. The method may be performed by a terminal device, or may be performed by a chip or a circuit in the terminal device. The method includes: A terminal device receives a first message in a first communication system, where the first message indicates the terminal device to perform DAPS handover between a source cell and a target cell in the first communication system. The terminal device determines that a capability available for the first communication system cannot support the DAPS handover, where a capability of the terminal device is used for communication in the first communication system and a second communication system, the first communication system corresponds to a first user identity, and the second communication system corresponds to a second user identity. The terminal device sends a request message in the second communication system, where the request message is used to request a scheduling interval, and the request message indicates at least one of the following: a purpose of requesting the scheduling interval, a band identifier corresponding to the scheduling interval, a cell group identifier corresponding to the scheduling interval, and a cell identifier corresponding to the scheduling interval. After receiving, in the second communication system, a response message of the request message, the terminal device performs the DAPS handover in the first communication system in the scheduling interval.

In this embodiment of this application, when a resource conflict exists between the DAPS handover in the first communication device and a service in the second communication system, the terminal device requests the scheduling interval from a network device of the second communication system, to pause service transmission in the second communication system, thereby avoiding packet loss during service transmission in the second communication system.

In a possible design, the method further includes: The terminal device determines that no response message is received within first duration after the request message is sent or that signal quality of the source cell in the first communication system is lower than a first threshold. The terminal device suspends communication with the source cell in the first communication system. The terminal device is handed over to the target cell in the first communication system. According to the foregoing design, the terminal device in the first communication system can be prevented from being handed over to the target cell in a timely manner in a basic handover manner before the signal quality of the source cell becomes worse, and communication interruption of the terminal device in the first communication system can be avoided.

In a possible design, the method further includes: The terminal device sends indication information to the source cell in the first communication system, where the indication information indicates that communication with the source cell has been suspended or is about to be suspended. In the foregoing design, the network device is indicated that communication with the source cell is suspended or is about to be suspended, so that the network device can stop scheduling the terminal device by the source cell, thereby avoiding a waste of resources.

In a possible design, the method further includes: The terminal device determines that no response message is received within first duration after the request message is sent or that signal quality of the source cell in the first communication system is lower than a first threshold. The terminal device performs the DAPS handover in the first communication system, and interrupts data transmission on a first resource in the second communication system during execution of the DAPS handover in the first communication system, where a resource conflict exists between the data transmission on the first resource in the second communication system and the DAPS handover in the first communication system. According to the foregoing design, the terminal device in the first communication system can be prevented from being handed over to the target cell in a timely manner before the signal quality of the source cell becomes worse, and communication interruption of the terminal device in the first communication system can be avoided.

In a possible design, the request message is a media access control (media access control, MAC) control unit (control element, CE) or a physical layer message. According to the foregoing design, a speed of requesting the scheduling interval by the terminal device and a response speed of the network device can be increased, and communication performance can be improved.

In a possible design, a resource conflict exists between the DAPS handover in the first communication system and a service of a primary cell in the second communication system, and the cell identifier corresponding to the scheduling interval is a primary cell identifier in the second communication system;
a resource conflict exists between the DAPS handover in the first communication system and a service of a first secondary cell or a first secondary cell group in the second communication system, and the cell identifier corresponding to the scheduling interval is a first secondary cell identifier or a first secondary cell group identifier in the second communication system; and/or
a resource conflict exists between the DAPS handover in the first communication system and a service that is in a first band and that is in the second communication system, and the band identifier corresponding to the scheduling interval is an identifier of the first band.

According to the foregoing design, the second communication system can determine a cell, a band, or the like in which the resource conflict exists, so that a scheduling interval of the cell can be configured.

In a possible design, the purpose of requesting the scheduling interval is to perform the DAPS handover in the first communication system.

According to a fifth aspect, this application provides a communication method. The method may be performed by a terminal device, or may be performed by a chip or a circuit in the terminal device. The method includes: A terminal device receives a first message in a first communication system, where the first message indicates the terminal device to perform first DAPS handover between a first source cell and a first target cell in the first communication system, and the first communication system corresponds to a first user identity. The terminal device receives a second message in a second communication system, where the second message indicates the terminal device to perform second DAPS handover between a second source cell and a second target cell in the second communication system, and the second communication system corresponds to a second user identity. The terminal device performs the first DAPS handover in the first communication system and/or the second DAPS handover in the second communication system according to at least one of the following: a capability of the terminal device, a service in the first communication system and a service in the second communication system, or receiving time of the first message and receiving time of the second message.

In this embodiment of this application, priorities of the DAPS handover in the two communication systems are determined, and handover behaviors in the two communication systems are determined based on the priorities, so that cases such as interruption or packet loss can be avoided occurring in the communication behaviors in the two communication systems. In this application, DAPS handover of a communication system with a high service priority and a high service latency requirement is preferentially performed, so that user experience can be improved.

In a possible design, that the terminal device performs the first DAPS handover in the first communication system and/or the second DAPS handover in the second communication system according to at least one of the following: a capability of the terminal device, a service in the first communication system and a service in the second communication system, or receiving time of the first message and receiving time of the second message includes: The terminal device determines that a priority of the first DAPS handover in the first communication system is higher than a priority of the second DAPS handover in the second communication system according to at least one of the following: the capability of the terminal device, the service in the first communication system and the service in the second communication system, or the receiving time of the first message and the receiving time of the second message. The terminal device performs the first DAPS handover in the first communication system. The terminal device performs the second DAPS handover in the second communication system after performing the first DAPS handover.

In the foregoing design, when the capability of the terminal device cannot support the DAPS handover in the two communication systems, the DAPS handover may be preferentially performed in a communication system with a higher priority, and the terminal device may be first handed over to a target cell in the two communication systems within a capability range of the terminal device, thereby reducing an overall communication latency of the terminal device and improving user experience.

In a possible design, that the terminal device performs the first DAPS handover in the first communication system and/or the second DAPS handover in the second communication system according to at least one of the following: a capability of the terminal device, a service in the first communication system and a service in the second communication system, or receiving time of the first message and receiving time of the second message includes: The terminal device determines that a priority of the first DAPS handover in the first communication system is higher than a priority of the second DAPS handover in the second communication system according to at least one of the following: the capability of the terminal device, the service in the first communication system and the service in the second communication system, or the receiving time of the first message and the receiving time of the second message. The terminal device performs the first DAPS handover in the first communication system. The terminal device suspends communication with the second source cell in the second communication system. The terminal device is handed over to the second target cell in the second communication system.

In the foregoing design, when the capability of the terminal device cannot support the DAPS handover in the two communication systems, the DAPS handover may be preferentially performed in a communication system with a high priority, and basic handover may be performed in a communication system with a low priority, and the terminal device may be first handed over to a target cell in the two communication systems within a capability range of the terminal device, thereby reducing an overall communication latency of the terminal device and improving user experience.

In a possible design, that the terminal device determines that a priority of the first DAPS handover in the first communication system is higher than a priority of the second DAPS handover in the second communication system according to at least one of the following: a hardware capability of the terminal device, the service in the first communication system and the service in the second communication system, or the receiving time of the first message and the receiving time of the second message includes: The terminal device determines that at least one of the following is satisfied: the receiving time of the first message and the receiving time of the second message satisfy a preset relationship, a priority of the service in the first communication system is higher than a priority of the service in the second communication system, or a latency requirement of the service in the first communication system is higher than a latency requirement of the service in the second communication system. The terminal device determines that a priority of the first DAPS handover in the first communication system is higher than a priority of the second DAPS handover in the second communication system.

In a possible design, the preset relationship is: the receiving time of the first message is earlier than the receiving time of the second message; or
the receiving time of the second message is earlier than the receiving time of the first message.

According to a sixth aspect, this application further provides a communication apparatus. The communication apparatus has a function of implementing any method provided in the first aspect, the third aspect, the fourth aspect, or the fifth aspect. The communication apparatus may be implemented by hardware, or may be implemented by hardware executing corresponding software. The hardware or the software includes one or more units or modules corresponding to the foregoing functions.

In a possible design, the communication apparatus includes a processor. The processor is configured to support the communication apparatus in performing a corresponding function of the network device in the foregoing method. The communication apparatus may further include a memory. The memory may be coupled to the processor, and store program instructions and data that are necessary for the communication apparatus. Optionally, the communication apparatus further includes an interface circuit. The interface circuit is configured to support communication between the communication apparatus and a device such as the network device.

For example, the communication apparatus has a function of implementing the method provided in the first aspect, and a transceiver is configured to receive a first message in a first communication system. The processor may be configured to: determine that a capability available for the first communication system cannot support DAPS handover, suspend communication with a source cell in the first communication system, and is handed over to a target cell in the first communication system.

For another example, the communication apparatus has a function of implementing the method provided in the third aspect, and the processor may be configured to determine that a first event occurs. A transceiver is configured to send indication information in a first communication system.

For another example, the communication apparatus has a function of implementing the method provided in the fourth aspect. A transceiver is configured to receive a first message in a first communication system. The processor may be configured to determine that a capability available for the first communication system cannot support DAPS handover. The transceiver is configured to send a request message in a second communication system. The processor is further configured to perform the DAPS handover in the first communication system in a scheduling interval after a response message of the request message is received in the second communication system.

For another example, the communication apparatus has a function of implementing the method provided in the fifth aspect, and a transceiver is configured to: receive a first message in a first communication system, and receive a second message in a second communication system. The processor may be configured to perform first DAPS handover in the first communication system and/or second DAPS handover in the second communication system according to at least one of the following: a capability of the terminal device, a service in the first communication system and a service in the second communication system, or receiving time of the first message and receiving time of the second message.

In a possible design, the communication apparatus includes corresponding function modules for respectively implementing the steps in the foregoing method. The function may be implemented by hardware, or may be implemented by hardware executing corresponding software. The hardware or software includes one or more modules corresponding to the foregoing functions.

In a possible design, a structure of the communication apparatus includes a processing unit (or a processing module) and a communication unit (or a communication module). These units may perform corresponding functions in the foregoing method examples. For details, refer to the descriptions in the method provided in the first aspect, the third aspect, the fourth aspect, or the fifth aspect. Details are not described herein again.

For example, the communication apparatus has a function of implementing the method provided in the first aspect, and the communication unit is configured to receive a first message in a first communication system. The processing unit may be configured to: determine that a capability available for the first communication system cannot support DAPS handover, suspend communication with a source cell in the first communication system, and is handed over to a target cell in the first communication system.

For another example, the communication apparatus has a function of implementing the method provided in the third aspect, and the processing unit may be configured to determine that a first event occurs. The communication unit is configured to send indication information in a first communication system.

For another example, the communication apparatus has a function of implementing the method provided in the fourth aspect. The communication unit is configured to receive a first message in a first communication system. The processing unit may be configured to determine that a capability available for the first communication system cannot support DAPS handover. The communication unit is configured to send a request message in a second communication system. The processing unit is further configured to perform the DAPS handover in the first communication system in a scheduling interval after a response message of the request message is received in the second communication system.

For another example, the communication apparatus has a function of implementing the method provided in the fifth aspect, and the communication unit is configured to: receive a first message in a first communication system, and receive a second message in a second communication system. The processing unit may be configured to perform first DAPS handover in the first communication system and/or second DAPS handover in the second communication system according to at least one of the following: a capability of the terminal device, a service in the first communication system and a service in the second communication system, or receiving time of the first message and receiving time of the second message.

According to a seventh aspect, this application further provides a communication apparatus. The communication apparatus has a function of implementing any method provided in the second aspect. The communication apparatus may be implemented by hardware, or may be implemented by hardware executing corresponding software. The hardware or the software includes one or more units or modules corresponding to the foregoing functions.

In a possible design, the communication apparatus includes a processor. The processor is configured to support the communication apparatus in performing a corresponding function of the network device in the foregoing method. The communication apparatus may further include a memory. The memory may be coupled to the processor, and store program instructions and data that are necessary for the communication apparatus. Optionally, the communication apparatus further includes an interface circuit. The interface circuit is configured to support communication between the communication apparatus and a device such as a terminal device.

For example, the communication apparatus has a function of implementing the method provided in the second aspect, and a transceiver is configured to: send a first message to the terminal device, and receive a first indication information from the terminal device. The processor is configured to stop data scheduling performed on the terminal device in a source cell.

In a possible design, a structure of the communication apparatus includes a processing unit (or a processing module) and a communication unit (or a communication module). These units may perform corresponding functions in the foregoing method examples. For details, refer to the descriptions in the method provided in the first aspect, the third aspect, the fourth aspect, or the fifth aspect. Details are not described herein again.

For example, the communication apparatus has a function of implementing the method provided in the second aspect, and the communication unit is configured to: send a first message to the terminal device, and receive first indication information from the terminal device. The processing unit is configured to stop data scheduling performed on the terminal device in a source cell.

According to an eighth aspect, a communication apparatus is provided. The communication apparatus includes a processor and an interface circuit. The interface circuit is configured to receive a signal from a communication apparatus other than the communication apparatus and transmit the signal to the processor, or send a signal from the processor to a communication apparatus other than the communication apparatus. The processor is configured to implement any method provided in the first aspect, the third aspect, the fourth aspect, or the fifth aspect through a logic circuit or by executing code instructions.

According to a ninth aspect, a communication apparatus is provided. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method in any one of the second aspect and the possible designs through a logic circuit or by executing code instructions.

According to a tenth aspect, a computer-readable storage medium is provided. The computer-readable storage medium stores a computer program or instructions. When the computer program or the instructions are executed by a processor, the method in any one of the first aspect to the fifth aspect and the possible designs is implemented.

According to an eleventh aspect, a computer program product storing instructions is provided. When the instructions are run by a processor, the method in any one of the first aspect to the fifth aspect and the possible designs is implemented.

According to a twelfth aspect, a chip system is provided. The chip system includes a processor, and may further include a memory, configured to implement the method in any one of the first aspect to the fifth aspect and the possible designs. The chip system may include a chip, or may include the chip and another discrete component.

According to a thirteenth aspect, a chip system is provided. The chip system includes a processor, and may further include a memory, configured to implement the method in any one of the second aspect and the possible designs. The chip system may include a chip, or may include the chip and another discrete component.

According to a fourteenth aspect, a communication system is provided. The system includes the apparatus in the first aspect and the apparatus in the second aspect.

According to a fifteenth aspect, a communication system is provided. The system includes the apparatus in the third aspect and a network device, for example, a network device accessed by a terminal device in a first communication system.

According to a sixteenth aspect, a communication system is provided. The system includes the apparatus in the fourth aspect, a network device accessed by a terminal device in a first communication system, and a network device accessed by the terminal device in a second communication system.

According to a seventeenth aspect, a communication system is provided. The system includes the apparatus in the fifth aspect, a network device accessed by a terminal device in a first communication system, and a network device accessed by the terminal device in a second communication system.

### BRIEF DESCRIPTION OF DRAWINGS

FIG. 1 is a schematic flowchart of basic handover according to an embodiment of this application;
FIG. 2 is a diagram of an architecture of a communication system according to an embodiment of this application;
FIG. 3 is a diagram of an architecture of a communication system according to an embodiment of this application;
FIG. 4 is a schematic flowchart of a communication method according to an embodiment of this application;
FIG. 5 is a schematic flowchart of a handover process according to an embodiment of this application;
FIG. 6 is a schematic flowchart of a communication method according to an embodiment of this application;
FIG. 7 is a schematic flowchart of a communication method according to an embodiment of this application;
FIG. 8A and FIG. 8B are a schematic flowchart of a handover process according to an embodiment of this application;
FIG. 9 is a schematic flowchart of a communication method according to an embodiment of this application;
FIG. 10 is a schematic flowchart of a handover process according to an embodiment of this application;
FIG. 11 is a diagram of a structure of a communication apparatus according to an embodiment of this application; and
FIG. 12 is a diagram of a structure of a communication apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

The following describes some terms in embodiments of this application, to facilitate understanding of a person skilled in the art.
(1) A terminal device may be a device having a wireless transceiver function or a chip that can be disposed in any device, or may be referred to as user equipment (user equipment, UE), an access terminal, a subscriber unit, a subscriber station, a mobile station, a mobile console, a mobile station, a remote station, a remote terminal, a mobile device, a user terminal, a wireless communication device, a user agent, or a user apparatus. The terminal device in embodiments of this application may be a mobile phone (mobile phone), a tablet computer (Pad), a computer with a wireless transceiver function, an X-reality (X reality, XR) device (for example, a virtual reality (virtual reality), VR) device, a mobile application augmented reality (augmented reality, AR) device, a mixed reality (mixed reality, MR) technology, a wireless terminal in industrial control (industrial control), a wireless terminal in self driving (self driving), a wireless terminal in video surveillance, a wearable terminal device, and the like. Alternatively, the terminal device may be enhanced mobile broadband (enhanced Mobile Broadband, eMBB) UE, ultra-reliable and low latency communications (ultra-reliable and low latency communications, URLLC) UE, an uncrewed aerial vehicle, another internet of things (internet of things, IoT) device, a positioning device, and the like.

A network device may be an apparatus configured to implement a function of the network device. The network device may be a device that communicates with a terminal device over an air interface in an access network through one or more cells. For example, the network device may be a next generation NodeB (next Generation NodeB, gNB) in a new radio (new radio, NR) system, an evolved NodeB (evolved NodeB, eNB) in a long term evolution (long term evolution, LTE) system, or the like. The network device may also be an apparatus that can support the network device in implementing a function of the network device, for example, a chip system. The apparatus may be installed in the network device.

### (2) Cell handover

In a communication system, when a terminal device in an RRC connected mode moves between cells, a cell handover procedure needs to be performed to change a serving cell of the terminal device, so as to ensure that the terminal device can enjoy a continuous network service in a network coverage area.

An inter-cell handover process of the terminal device is controlled by a network device. A cell that provides a service for the terminal device before the handover may be a source cell, a cell to which the terminal device is handed over is a target cell, and the target cell provides a service for the terminal device after successful handover. Communication of the source cell and the target cell may be provided by different base stations. A base station that provides source cell communication is a source network device, and a base station that provides target cell communication is a target network device. When the terminal device is handed over between the base stations, explicit RRC signaling needs to be used to trigger the cell handover.

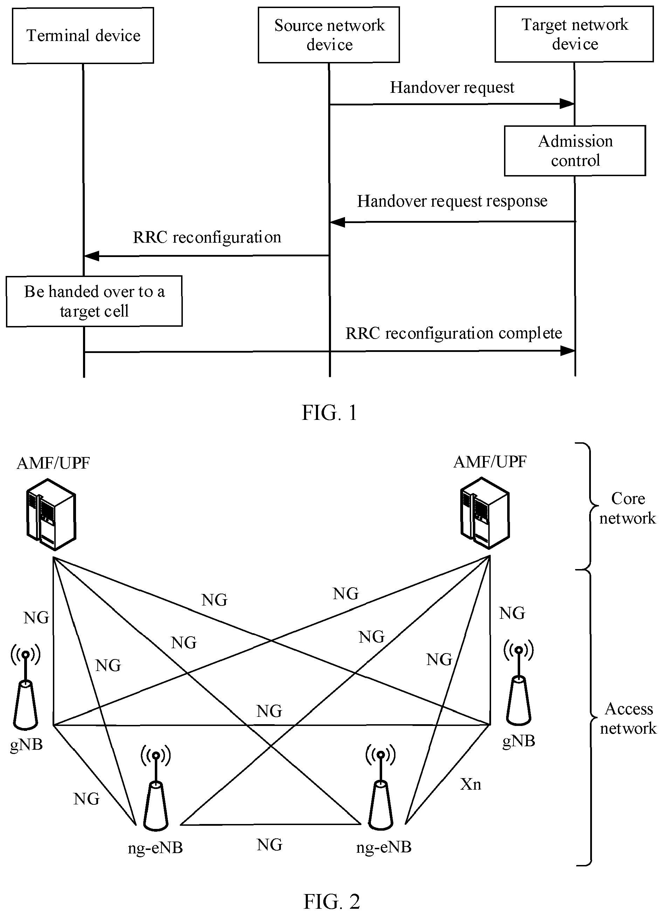

When determining, based on a handover policy and a cell quality measurement result reported by the terminal device, to trigger the handover, the source network device initiates a handover request (handover request) to the target network device. The target network device performs admission control, and responds to a handover request (handover request acknowledge) of the source cell; and a new RRC configuration is provided and carried in a handover command (handover command) message. The source network device triggers the handover through an RRC reconfiguration message (RRCReconfiguration) of the sent handover command, and forwards, to the terminal device, the RRC configuration provided by the target network device. The terminal device initiates the handover to the target cell based on configuration information in the RRC reconfiguration message. The configuration information may include a physical cell identifier of the target cell, a new cell radio network temporary identifier (cell radio network temporary identifier, C-RNTI), and the like. The terminal device completes a synchronization process in the target cell based on the configuration information, and sends an RRC reconfiguration complete message to the target network device after the terminal device is successfully handed over. For example, a cell handover procedure may be shown in FIG. 1. To distinguish from DAPS handover in the following, cell handover shown in FIG. 1 is basic handover in the following.

In the cell handover procedure shown in FIG. 1, when receiving an RRC reconfiguration message delivered by a source cell, a terminal device releases (detach) a connection to the source cell, and stops uplink and downlink data transmission with the source cell. Only after the terminal device sends an RRC reconfiguration complete (RRCReconfigurationComplete) message after the handover is completed to the target network device, the target network device sends data to the terminal device. In the cell handover procedure, before the terminal device establishes a connection to a target cell, because the terminal device disconnects from the source cell and does not establish the connection to the target cell, the terminal device cannot perform data transmission in this time period. Consequently, transmission interruption occurs.

To avoid interruption in the handover process, DAPS handover is proposed currently. The DAPS handover is a handover process in which a connection to a source network device is maintained after an RRC message used for handover is received, and the source cell is not released until random access to a target network device succeeds.

Different from the basic handover, during the DAPS handover, after receiving the RRC reconfiguration message sent by the source network device, the terminal device stops sending and receiving RRC control plane signaling of the source cell, suspends a signaling radio bearer (signaling radio bearer, SRB) of the source cell, maintains a user plane connection to the source cell, and continues to perform data transmission with the source cell until the terminal device successfully performs random access to the target network device. In a downlink direction, after sending the RRC reconfiguration message of the handover command, the source network device continues to send downlink data to the terminal device. After receiving a handover success message sent by the target network device, the source network device stops downlink scheduling. Before the terminal device disconnects from the source cell, the terminal device continues to receive the downlink data from the source cell. In an uplink direction, after sending the RRC reconfiguration message of the handover command, the source network device continues to send uplink data to the terminal device. After receiving a handover success message sent by the target network device, the source network device stops uplink scheduling. Before the terminal device successfully performs random access to the target cell, the terminal device continues to send the uplink data to the source cell.

### (3) Intra-frequency DAPS handover and inter-frequency DAPS handover

If a center frequency of a source cell synchronization signal/physical broadcast channel block (synchronization signal/physical broadcast channel block, SSB) is the same as that of a target cell SSB and subcarrier spacings of the two SSBs are the same, DAPS handover is intra-frequency DAPS (intra-frequency DAPS) handover. Otherwise, the DAPS handover is inter-frequency DAPS (inter-frequency DAPS) handover.

### (4) Multi-user identity terminal device

A terminal device may have a plurality of user identities. For example, the terminal device may have two user identities (for example, a first user identity and a second user identity). The terminal device works in a first communication system as the first user identity, and works in a second communication system as the second user identity.

In this application, the "user identity" (for example, the first user identity or the second user identity) is a logical concept, and the "user identity" may correspond to a subscriber identity module (Subscriber Identity Module, SIM) card, subscriber information, a virtual SIM card, or a subscriber identity (for example, an international mobile subscriber identity (international mobile subscriber identity, IMSI)/a temporary mobile subscriber identity (temporary mobile subscriber identity, TMSI)), and is not limited to a natural person user or a physical terminal (mobile phone). The user identity may be registered with a network, or may not be registered with the network. Alternatively, it is understood as that the network may not sense the user identity of the terminal device (for example, the terminal device may receive broadcast data of a network device as a specific user identity). From a perspective of the network side, different "user identities" logically may correspond to different communication entities served by the network side. For example, a terminal having two SIM cards is equivalent to two communication entities for the network side. For another example, when the "user" corresponds to the SIM card or the subscriber information, the network side identifies two terminals having different SIM cards or different subscriber information as two different communication entities, or identifies a same terminal device having a plurality of different SIM cards or a plurality of pieces of subscriber information as a plurality of different communication entities, even though actually, the terminal having the plurality of different SIM cards or the plurality of pieces of subscriber information is only one physical entity. Communication systems corresponding to different user identities may belong to a same public land mobile network (public land mobile network, PLMN) or different PLMNs, and communication systems corresponding to different user identities may belong to a same operator network or different operator networks.

In embodiments of this application, "at least one" means one or more, and "a plurality of means two or more. "And/or" describes an association relationship between associated objects, and represents that three relationships may exist. For example, A and/or B may represent the following cases: A exists alone, both A and B exist, and B exists alone, where A and B may be singular or plural. The character "/" generally indicates an "or" relationship between the associated objects. At least one of the following items (pieces) or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

Moreover, unless otherwise stated on the contrary, ordinal terms such as "first" and "second" mentioned in embodiments of this application are used to distinguish between a plurality of objects, and are not intended to limit sizes, content, a sequence, a time sequence, priorities, importance degrees, or the like of the plurality of objects. For example, the first communication system and the second communication system are merely used to distinguish between different communication systems, and do not indicate different locations, priorities, importance degrees, or the like of the two communication systems.

The foregoing describes some noun concepts used in embodiments of this application. The following describes technical features of embodiments of this application.

For a multi-user identity terminal device, for example, a terminal device having two SIM cards, one terminal device supports two communication systems, and the two communication systems may respectively correspond to a first user identity and a second user identity. When registering with a communication system, a terminal device reports a capability of the terminal device to a network device corresponding to the communication system, and the network device determines, based on the capability of the terminal device, how to configure and schedule the terminal device. Therefore, for the terminal device having two cards, when registering with the two communication systems, the terminal device may separately report the capability of the terminal device to network devices corresponding to the communication systems.

Communication behaviors of the terminal device in different communication systems are independent of each other. From a perspective of the network device, the network device cannot sense communication behaviors of the terminal device in a plurality of communication systems. From a perspective of the terminal device, communication behaviors of the terminal device in a plurality of communication systems share a capability (for example, a baseband processing capability and a radio frequency capability) of the terminal device. Therefore, for the multi-user identity terminal device, when the terminal device performs communication behaviors in a plurality of communication systems, if a network device corresponding to each communication system schedules the terminal device based on a maximum capability of the terminal device, the terminal device cannot simultaneously perform the communication behaviors in the plurality of communication systems. Consequently, communication behaviors of the terminal device in one or more communication systems are interrupted, affecting user experience.

Similarly, if the terminal device performs communication in the first communication system as the first user identity (for example, a corresponding first SIM card is registered with a network), and receives broadcast data in the second communication system as the second user identity (the second user identity is not registered with the network), when the communication behavior in the second communication system occupies a part of a capability of the terminal device, the terminal device cannot work in the first communication system with a maximum capability of the terminal device. If a network device corresponding to the first communication system schedules the terminal device based on the maximum capability of the terminal device, a normal communication behavior is affected, and user experience is affected.

For example, a communication behavior of the terminal device in a communication system (assumed as a communication system 1) occupies a part of a capability of the terminal device. If the terminal device receives, in another communication system (assumed as a communication system 2), a handover command indicating to perform DAPS handover, the terminal device maintains a user plane connection of a source cell in the communication system 2 during execution of the DAPS handover, and continues to perform data transmission with the source cell. However, in this case, communication behaviors of the terminal device in the two communication systems may exceed the capability of the terminal device, and consequently normal communication cannot be performed.

Based on this, an embodiment of this application provides a communication method and apparatus, to implement communication of a terminal device that supports a plurality of user identities. The method and the apparatus are based on a same inventive concept. Because the method and the apparatus have a similar problem-resolving principle, for implementations of the apparatus and the method, refer to each other, and no repeated description is provided.

A communication method provided in this application may be applied to various communication systems, for example, an internet of things (internet of things, IoT), a narrow band internet of things (narrow band internet of things, NB-IoT), an LTE, a 5th generation (5G) communication system, an LTE-5G hybrid architecture, or a 5G NR system and 6G or a new communication system emerging in future communication development.

The communication method provided in this embodiment of this application may be applied to a system including a terminal device and a network device. The terminal device may be a multi-user identify terminal device, for example, a multi-card terminal device. The system may further include a core network device. Any two network devices in the communication system may be connected to a same core network device, or may be connected to different core network devices.

The communication system may be a 5G NR communication system. An interface between the core network device and the network device is an NG interface, and different network devices are connected through an Xn interface. For example, the network device is a gNB or a ng-eNB, and the core network device is an access and mobility management function (access and mobility management function, AMF)/user plane function (user plane function, UPF). Connection relationships between the AMF/UPF and the network device and between different AMFs/UPFs and network devices may be shown in FIG. 2.

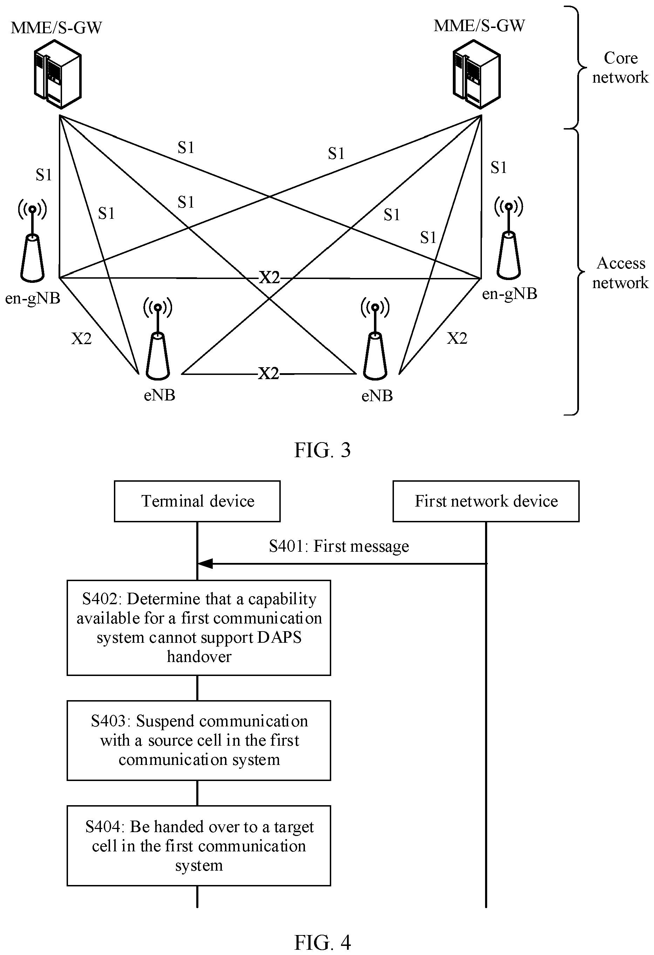

The communication system may be an LTE communication system. An interface between the core network device and the network device is an S1 interface, and different network devices are connected through an X2 interface. For example, the network device is an eNB or an en-gNB, and the core network device is an MME/S-GW. Connection relationships between a mobility management entity (mobility management entity, MME) and/or a serving gateway (serving gateway, S-GW) and the network device and between different MMEs/S-GWs and network devices may be shown in FIG. 3.

A network architecture and a service scenario described in embodiments of this application are intended to describe the technical solutions in embodiments of this application more clearly, and do not constitute any limitation on the technical solutions provided in embodiments of this application. A person of ordinary skill in the art may know that, with evolution of a network architecture and emergence of a new service scenario, the technical solutions provided in embodiments of this application are also applicable to a similar technical problem.

The following describes the technical solutions in embodiments of this application with reference to the accompanying drawings in embodiments of this application.

The terminal device in this application may support a first user identity and a second user identity. The first user identity corresponds to a first communication system, and the second user identity corresponds to a second communication system. The first communication system may or may not sense the first user identity of the terminal device, and the second communication system may or may not sense the second user identity of the terminal device. This is not specifically limited in this application.

It should be noted that, that the terminal device receives information/message/data and the like in the first communication system may also be described as that the terminal device receives information/message/data and the like as the first user identity. Similarly, that the terminal device receives information/message/data and the like in the second communication system may also be described as that the terminal device receives information/message/data and the like as the second user identity. In other words, an action performed by the terminal device as the first identity may also be understood as an action performed in the first communication system. For brevity of description, details are not described again subsequently.

The first communication system may be a 5G network, or may be a 4G/3G/2G network, or certainly may be another network that appears in future communication development. The second communication system may be a 5G network, or may be a 4G/3G/2G network, or certainly may be another network that appears in future communication development. Network protocol versions of the first communication system and the second communication system may be the same or may be different.

The first communication system and the second communication system may belong to a same PLMN or may belong to different PLMNs.

The first communication system and the second communication system may belong to a same operator network, or may belong to different operator networks.

It should be understood that, in this embodiment of this application, an example in which the terminal device supports two user identities is merely used for description, and a quantity of user identities supported by the terminal device is not limited.

FIG. 4 is a schematic flowchart of a communication method according to this application. The method includes the following steps.

S401: A first network device sends a first message to a terminal device. Correspondingly, the terminal device receives the first message from the first network device. Specifically, the terminal device may receive the first message as a first user identity.

The first message indicates the terminal device to perform DAPS handover between a source cell and a target cell in a first communication system. The first message may further include an RRC configuration of the target cell. The first network device is a network device accessed by the terminal device in the first communication system. It may alternatively be understood as that the first network device is a network device corresponding to the source cell from which the terminal device is handed over in the first communication system. It may alternatively be understood as that the first network device is a network device accessed by the terminal device as the first user identity. The target cell to which the terminal device is handed over in the first communication system may correspond to a second network device. The first network device may be different from the second network device, for example, handover between base stations. The first network device is the same as the second network device. For example, the terminal device is handed over between different cells of a same base station.

For example, the first message may be an RRC reconfiguration message.

S402: The terminal device determines that a capability available for the first communication system cannot support the DAPS handover.

A capability of the terminal device is used for communication in the first communication system and a second communication system, that is, the capability of the terminal device is shared by communication of two user identities. Therefore, the terminal device needs to determine whether the DAPS handover can be performed as the first user identity while performing communication as a second user identity.

In an example, that a capability available for the first communication system cannot support DAPS handover may be understood as that the terminal device cannot simultaneously receive downlink data and/or uplink data of the source cell and the target cell in the first communication system.

In another example, that a capability available for the first communication system cannot support DAPS handover may be understood as that network configuration/scheduling received by the terminal device in the first communication system and the second communication system exceeds a maximum radio access capability of the terminal device.

For example, the capability of the terminal device may be understood as a radio access capability of the terminal device. For example, the capability of the terminal device may also be understood as a baseband processing capability and/or a radio frequency capability of the terminal device, or may be understood as a baseband processing resource and/or a radio frequency resource of the terminal device. The baseband processing capability and/or the radio frequency capability of the terminal device include/includes at least one of the following: a carrier aggregation capability supported by the terminal device, a dual-connectivity capability supported by the terminal device, a band combination supported by the terminal device, a band combination supported by the terminal device for carrier aggregation or dual-connectivity, a band supported by the terminal device, a quantity of component carriers (component carriers) supported by the terminal device, a channel state information reference signal (channel state information reference signal, CSI) processing capability of the terminal device, a multiple-input multiple-output (multiple-input multiple-output, MIMO) capability of the terminal device, a quantity of radio frequency channels supported by the terminal device, a quantity of transmit radio frequency links/receive radio frequency links supported by the terminal device, a quantity of transmit antennas/receive antennas supported by the terminal device, and the like.

For example, the capability of the terminal device is the quantity of component carriers. In a possible scenario, the capability of the terminal device supports communication of three component carriers (which may be understood as that the terminal device supports carrier aggregation of three component carriers configured by the network device, or the terminal device supports sending and receiving of data on the three component carriers), and a capability of two component carriers is required for the terminal device to perform DAPS handover. When the terminal device works only in the first communication system, the capability of the terminal device can support communication on the three component carriers. Therefore, the terminal device can support the DAPS handover. When the terminal device performs communication in the second communication system by using two component carriers (which may be understood as that the network device of the second communication system configures or activates two component carriers for the terminal device), the capability that is of the terminal device and that is available for the first communication system supports communication on only one component carrier. Therefore, the capability that is of the terminal device and that is available for the first communication system cannot support the DAPS handover of the terminal device in the first communication system.

For example, the capability of the terminal device is the band combination. In a possible scenario, the capability of the terminal device supports DAPS handover on two carriers whose band combination is a band A and a band B. When the terminal device works only in the first communication system, the capability of the terminal device can support the DAPS handover on the two carriers whose band combination is the band A and the band B. When the terminal device performs communication in a band C in the second communication system, the capability of the terminal device in the first communication system cannot support simultaneous receiving and/or sending of data on the two carriers whose band combination is the band A and the band B. If a network device of the first communication system indicates the terminal device to perform DAPS handover from a source cell in the band A (or the band B) to a target cell in the band B (or the band A), the capability of the terminal device cannot support the DAPS handover between the source cell and the target cell whose band combination is the band A and the band B.

Alternatively, the capability of the terminal device may be understood as a carrier aggregation capability and/or a dual-connectivity capability of the terminal device.

In a specific implementation, the terminal device may determine that a carrier aggregation capability and/or a dual-connectivity capability that are available for the first communication system cannot support the DAPS handover. For example, the carrier aggregation capability is used as an example. In a possible scenario, communication of the terminal device in the second communication system occupies a part of the carrier aggregation capability of the terminal device, and the remaining part of the carrier aggregation capability of the terminal device cannot support the DAPS handover of the terminal device in the first communication system.

A status or a behavior of the terminal device in the second communication system is not limited in this embodiment of this application. The terminal device in the second communication system may be in an idle mode or an inactive mode, or may be in an RRC connected mode.

In an example description, the communication behavior of the terminal device in the second communication system may include at least one of the following: receiving paging, receiving a system message, performing measurement of a serving cell or a neighboring cell, performing at least one of receiving and sending behaviors of uplink service data or performing at least one of receiving and sending behaviors of downlink service data, receiving broadcast (broadcast) downlink service data, receiving multicast (multicast) downlink service data or sending multicast uplink service data, and receiving or sending small data (small data).

In a possible scenario, the DAPS handover of the terminal device in the first communication network cannot coexist with the communication behavior in the second communication network. For example, it is assumed that the terminal device may work on a single carrier in the second communication system. That the DAPS handover of the terminal device in the first communication network cannot coexist with the communication behavior in the second communication network may be understood as that the DAPS handover of the terminal device in the first communication network cannot coexist with communication of a primary cell (primary cell, PCell) in the second communication network, or may be understood as that the terminal device cannot perform communication in the primary cell in the second communication system while receiving and/or sending data in the source cell and the target cell in the first communication system.

For another example, it is assumed that the terminal device may work in a carrier aggregation (carrier aggregation, CA) or dual-connectivity (dual-connectivity, DC) manner in the second communication system. That the DAPS handover of the terminal device in the first communication network cannot coexist with the communication behavior in the second communication network may be understood as that the DAPS handover of the terminal device in the first communication network may not coexist with one or more secondary cells (secondary cell, SCell) or secondary cell groups (secondary cell group, SCG) in the second communication system.

S403: The terminal device suspends communication with the source cell in the first communication system.

For example, that the terminal device suspends communication with the source cell in the first communication system may be specifically implemented in at least one of the following six manners:
Manner 1: The terminal device releases an RRC connection to the source cell in the first communication system.
Manner 2: The terminal device suspends transmission and reception of a DRB of a source primary cell group in the first communication system.
Manner 3: The terminal device determines that a radio link failure occurs in a source primary cell or the source primary cell group in the first communication system.

In a handover process of the terminal device, the terminal device is handed over from a primary cell accessed by the terminal device. In other words, the source cell in the handover process of the terminal device is a primary cell accessed by the terminal device before the handover. Therefore, the source cell in the first communication system described above may also be the source primary cell in the first communication system. Therefore, in this application, the source primary cell in the first communication system and the source cell in the first communication system described above may be understood as a same meaning. The source primary cell group in the first communication system may include the source cell in the first communication system described above.

Manner 4: The terminal device is detached (detached) from the source cell in the first communication system.

Manner 5: The terminal device stops downlink and/or uplink communication with the source cell in the first communication system.

Manner 6: The terminal device releases a resource and a configuration of the source cell in the first communication system, where the resource and the configuration specifically include at least one of the following: a radio resource configuration, an access stratum security configuration, a measurement configuration, a physical channel configuration, a MAC configuration, a radio link control (radio link control, RLC) configuration/RLC entity, and a PDCP configuration/PDCP entity.

Optionally, the terminal device may further send first indication information to the first network device, where the first indication information indicates that communication with the source cell has been suspended or is about to be suspended. Alternatively, the first indication information indicates that the downlink and/or uplink communication with the source cell has been stopped or is about to be stopped. Alternatively, the first indication information indicates that the RRC connection to the source cell has been released or is about to be released. Alternatively, the first indication information indicates that the DAPS handover of the terminal device in the first communication system is suspended or is about to be suspended. Alternatively, the first indication information indicates that transmission and reception of the DRB in the source primary cell group are suspended or are about to be suspended. Alternatively, the first indication information indicates that the DAPS handover has been or is about to be rolled back to basic handover.

Correspondingly, after receiving the first indication information, the first network device may stop data scheduling performed on the terminal device in the source cell, or may be described as stopping communication with the terminal device in the source cell.

In a possible embodiment, the first network device may further send second indication information to the second network device. The second indication information indicates that data scheduling in the source cell has been suspended or is about to be suspended, indicates that the DAPS handover has been or is about to be rolled back to basic handover, or indicates that the RRC connection to the source cell has been released or is about to be released. In an implementation, the first network device may implicitly indicate the second indication information based on a sequence number status transfer (SN STATUS TRANSFER) message. In another implementation, the first network device may alternatively explicitly send the second indication information.

Optionally, if the first network device explicitly sends the second indication information to the second network device, after the terminal device successfully performs random access to the target cell and sends an RRC reconfiguration complete message to the target cell, the second network device may not need to send a handover success (handover success) message to the first network device.

Alternatively, if the second network device receives, before receiving the RRC reconfiguration complete message sent by the terminal device, an SN STATUS TRANSFER message sent by the first network device, the message implicitly indicates the second indication information. In this case, after receiving the RRC reconfiguration complete message sent by the terminal device, the second network device may not need to send a handover success message to the first network device.

The second network device is a network device to which the terminal device is about to be handed over in the first communication system. It may alternatively be understood as that the second network device is a network device corresponding to the target cell of the terminal device in the first communication system.

For example, the first network device is a source network device from which the terminal device is handed over in the first communication system, and the second network device is a target network device to which the terminal device is handed over in the first communication system.

It should be noted that the foregoing embodiment is described by using an example in which the source cell and the target cell of the terminal device in the first communication system correspond to different network devices. In specific implementation, the source cell and the target cell of the terminal device in the first communication system may alternatively correspond to a same network device. This is not specifically limited herein.

S404: The terminal device is handed over to the target cell in the first communication system.

In this embodiment of this application, when the DAPS handover of the terminal device in the first communication system and a communication behavior of the terminal device in another communication system exceed the capability of the terminal device, communication with the source cell in the first communication system is suspended, so that the DAPS handover in the first communication system can be rolled back to basic handover. Therefore, the terminal device can be handed over to the target cell in the first communication system without affecting communication of the terminal device in the another communication system. In this manner, first, it may be avoided that, after the terminal device receives an RRC reconfiguration message of a DAPS handover command in the first communication system, RRC re-establishment is triggered because the terminal device determines that a network configuration exceeds the capability of the terminal device, and consequently a service currently being performed in the first communication system is interrupted, thereby affecting user experience of the terminal device in the first communication system as a first user identity; second, it may also be avoided that the terminal device interrupts communication in the another communication system to perform the DAPS handover in the first communication system, thereby affecting user experience of the terminal device in the second communication system as a second user identity; and third, the terminal device may be further handed over, by rolling back to the basic handover, to a target cell with better signal quality in the first communication system in a timely manner, to avoid that communication quality of the first communication system is affected because the terminal device stays in a source cell with poor signal quality for a long time in the first communication system. When the terminal device receives the RRC reconfiguration message of the DAPS handover command but cannot perform the DAPS handover, the terminal device is handed over to a target cell with better signal quality according to a basic handover procedure, so that communication performance in the first communication system can be improved.

In a possible implementation, the first message may further carry configuration information of N radio bearers, the configuration information of the N radio bearers carries DAPS configurations, and N is an integer greater than 0. The "carrying DAPS configurations" may be understood as setting a DAPS configuration (DAPS-Config) information element as true. After determining that the capability available for the first communication system cannot support the DAPS handover, the terminal device may not configure the N radio bearers as DAPS bearers. Alternatively, "not configuring the N radio bearers as DAPS bearers (DAPS bearers)" may alternatively be described as "configuring the N radio bearers as non-DAPS bearers (non-DAPS bearers)", as "ignoring DAPS configurations of the N radio bearers in first information", or as "considering DAPS configurations of the N radio bearers as unconfigured (not true)". The radio bearer may be a data radio bearer (Data Radio Bearer, DRB).

In the foregoing manner, the terminal device can perform cell handover in the first communication system based on the basic handover, so that communication of the terminal device in the second communication system and communication of the terminal device in the first communication system are maintained within a capability range of the terminal device, or it is ensured that resources used by the terminal device during communication in the first communication system and the second communication system do not exceed a hardware resource of the terminal device, thereby avoiding communication interruption.

Optionally, after the N radio bearers are configured as the non-DAPS, if RRC synchronization reconfiguration of the terminal device fails, the terminal device may trigger RRC connection re-establishment.

Optionally, the first message may further carry configuration information of another radio bearer. For example, the first message may carry configuration information of M radio bearers, and the configuration information of the M radio bearers does not carry DAPS configurations, and M is an integer greater than 0. The another radio bearer may be a data radio bearer DRB.

In an embodiment, if the terminal device successfully accesses the target cell in the first communication system, the terminal device may further send first information to the network device corresponding to the target cell, where the first information indicates that the terminal device suspends communication with the source cell due to a resource conflict. That "the terminal device suspends communication with the source cell due to a resource conflict" may also be understood as that the terminal device suspends communication with the source cell because the capability that is of the terminal device and that is available for the first communication system is insufficient, the capability that is of the terminal device and that is available for the first communication system is temporarily limited, a hardware resource that is of the terminal device and that is available for the first communication system is insufficient, or a resource that is of the terminal device and that is available for the first communication system is temporarily limited, or due to a dual-card reason, a terminal device capability sharing reason, a terminal device dual-card resource sharing reason, or the like The "suspending communication with the source cell" may be understood as suspending communication with the source cell of the DAPS handover, releasing an RRC connection to the source cell of the DAPS handover, rolling back from the DAPS handover to the basic handover, or occurring a radio link failure (radio link failure, RLF) in the source cell of the DAPS handover.

This manner may help a network device optimize network mobility, for example, optimize settings of mobility-related parameters, such as timer duration related to a handover process, and a cell signal quality threshold in a cell selection/reselection process. A specific optimization parameter and a value of the parameter are not limited in this embodiment.

In a specific implementation, if the terminal device successfully accesses the target cell in the first communication system, the terminal device may send a success handover report (success HO-Report, SHR) to the target cell. The success handover report may carry first information. For example, the success handover report may indicate the first information based on a new SHR-cause (SHR-Cause) value.

In an embodiment, if the terminal device fails to be handed over in the first communication system, for example, RRC synchronization reconfiguration fails or a timer T304 expires, the terminal device records second information. The second information indicates that during the DAPS handover, the terminal device suspends communication between the terminal device and the source cell due to a resource conflict. Understanding of suspending communication with the source cell is the same as that described above, and details are not described herein again. After the terminal device re-establishes the RRC connection, the terminal device reports the second information in a serving cell that is successfully accessed. In a specific implementation, the second information is a variable RLF-report.

To better understand the solutions provided in this application, the following describes an example of a handover process.

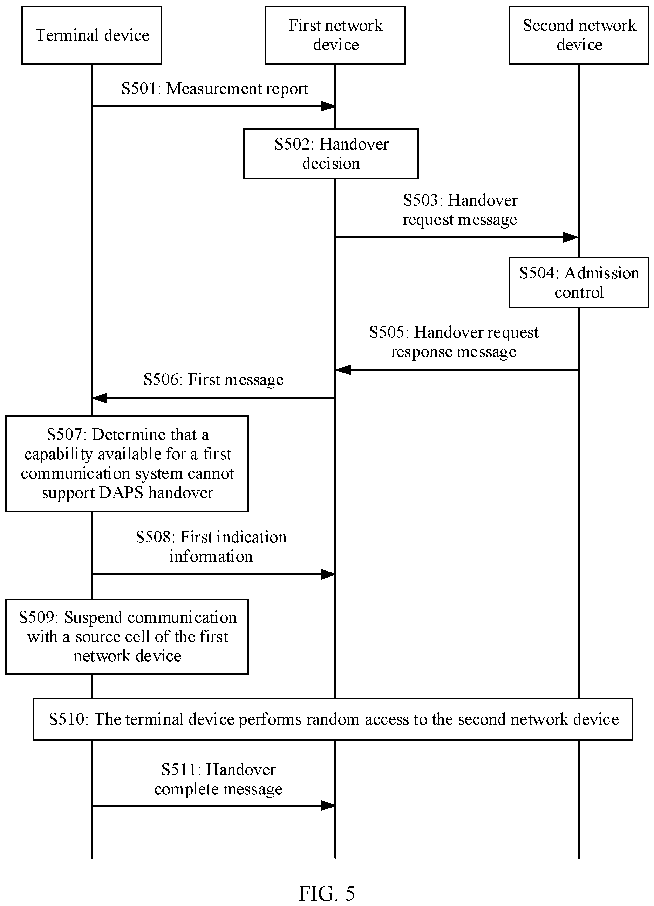

As shown in FIG. 5, a handover process includes the following steps.

S501: A terminal device sends a measurement report to a first network device. The measurement report may carry a measurement result of a serving cell and at least one neighboring cell.

S502: The first network device makes a handover decision.

S503: The first network device sends a handover request message to a second network device.

The handover request message is used to request to hand over the terminal device to a target cell of the second network device.

S504: The second network device performs admission control.

S505: The second network device sends a handover request response message to the first network device.

The handover request response message is used to allow the terminal device to be handed over to the target cell of the second network device. The handover request response message includes a handover command, to provide the first network device with an RRC configuration of the target cell.

S506: The first network device sends a first message to the terminal device.

For details about the first message, refer to the related descriptions in S401. Details are not described herein again.

Optionally, the first network device sends an early status transfer message to the second network device.

The early status transfer message indicates a sequence number of downlink data that has been sent by the first network device to the terminal device.

S507: The terminal device determines that a capability available for a first communication system cannot support DAPS handover.

For details of this step, refer to the related descriptions in S402. Details are not described herein again.

S508: The terminal device sends first indication information to the first network device.

For details about the first indication information, refer to the foregoing related descriptions. Details are not described herein again.

S509: The first network device suspends communication with a source cell of the first network device.

It should be noted that an execution sequence of S509 and S510 is not limited in this application.

S510: The terminal device performs random access in the target cell of the second network device.

S511: The terminal device sends a handover complete message to the first network device.

In this embodiment of this application, when the DAPS handover of the terminal device in the first communication system and a communication behavior of the terminal device in another communication system exceed the capability of the terminal device, communication with the source cell in the first communication system is suspended, so that the DAPS handover in the first communication system can be rolled back to basic handover. Therefore, the terminal device can be handed over to the target cell in the first communication system without affecting communication of the terminal device in the another communication system. In this manner, first, it may be avoided that, after the terminal device receives an RRC reconfiguration message of a DAPS handover command in the first communication system, RRC re-establishment is triggered because the terminal device determines that a network configuration exceeds the capability of the terminal device, and consequently a service currently being performed in the first communication system is interrupted, thereby affecting user experience of the terminal device in the first communication system as a first user identity; second, it may also be avoided that the terminal device interrupts communication in the another communication system to perform the DAPS handover in the first communication system, thereby affecting user experience of the terminal device in the second communication system as a second user identity; and third, the terminal device may be further handed over, by rolling back to the basic handover, to a target cell with better signal quality in the first communication system in a timely manner, to avoid that communication quality of the first communication system is affected because the terminal device stays in a source cell with poor signal quality for a long time in the first communication system. When the terminal device receives the RRC reconfiguration message of the DAPS handover command but cannot perform the DAPS handover, the terminal device is handed over to a target cell with better signal quality according to a basic handover procedure, so that communication performance in the first communication system can be improved.

The following provides another communication method. In the communication method, when a terminal device determines that DAPS handover in a first communication system and a communication behavior in another communication system have exceeded or are about to exceed a capability of the terminal device, the terminal device is indicated to suspend a DAPS capability in the first communication system, so that a network device corresponding to the first communication system indicates the terminal device to perform basic handover in the first communication system, thereby avoiding that handover of the terminal device in the first communication system exceeds the capability of the terminal device. Alternatively, when it is determined that the DAPS handover in the first communication system and the communication behavior in the another communication system no longer exceed or are no longer about to exceed the capability of the terminal device, the terminal device is indicated to resume the DAPS capability in the first communication system, so that the network device corresponding to the first communication system indicates the terminal device to perform the DAPS handover in the first communication system, thereby reducing a communication latency when the terminal device is handed over in the first communication system. The following specifically describes the communication method.

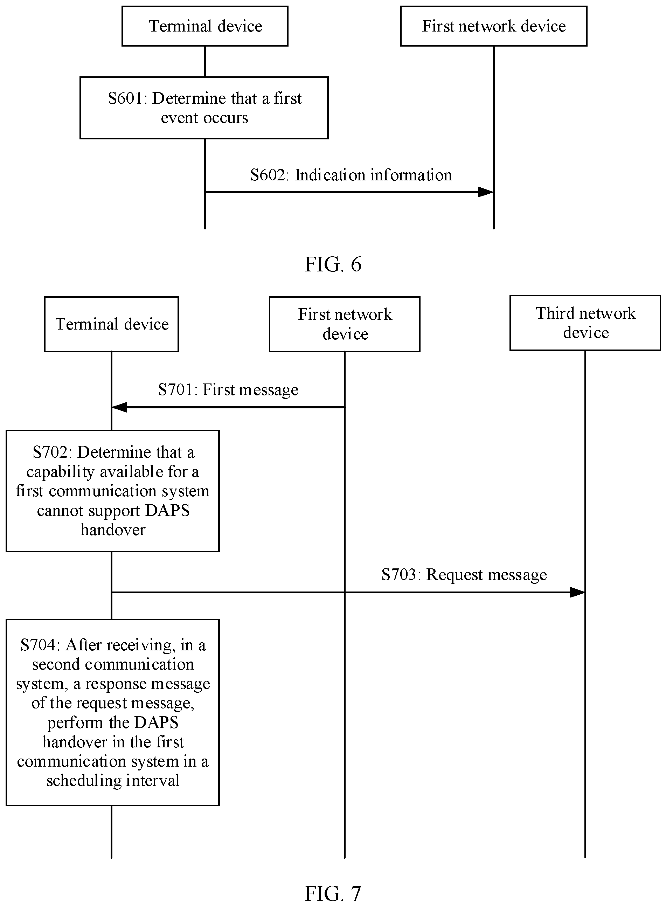

FIG. 6 is a schematic flowchart of a communication method according to this application. The method includes the following steps.

S601: A terminal device determines that a first event occurs.

S602: The terminal device sends indication information in a first communication system. Correspondingly, the first network device receives the indication information from the terminal device. Specifically, the terminal device may send the indication information as a first user identity.

The first network device is a network device accessed by the terminal device in the first communication system.

The indication information is used to update a DAPS capability of the terminal device in the first communication system.

The indication information may indicate to update a DAPS capability of per UE. Therefore, the indication information is effective for any band combination of the terminal device or a carrier of the any band. In other words, the indication information is applicable to the terminal device. It may also be understood as that the indication information indicates to update the DAPS capability of the terminal device (or all band combinations of the terminal device) in the first communication system. Correspondingly, after receiving the indication information, the first network device updates DAPS capabilities of the all band combinations of the terminal device based on the indication information. For example, the indication information may be one bit. In this embodiment of this application, the indication information may be effective for the terminal device, so that signaling overheads can be reduced.

Alternatively, the indication information may indicate to update a capability of per band of per band combination. Therefore, the indication information is effective for at least one band (for example, a first band) in a first band combination, that is, the indication information is applicable to the at least one band in the first band combination of the terminal device. It may also be understood as that the indication information indicates to update a DAPS capability of the at least one band in the first band combination of the terminal device in the first communication system. Correspondingly, after receiving the indication information, the first network device updates the DAPS capability that is of the terminal device and that is of the at least one band in the first band combination based on the indication information. In this embodiment of this application, the indication information may be effective for one or more bands in the band combination, so that flexibility of updating the DAPS capability can be improved.

In a specific example, the at least one band in the first band combination may include a band in which the terminal device communicates with a source cell in the first communication system.

For example, the terminal device communicates with the source cell in the first communication system in a band A, and the indication information may indicate to update a DAPS capability of band A + band B in a band combination of band A + band B + band C. Correspondingly, after the first network device receives the indication information, it may be understood as that in this case, the terminal device does not support DAPS handover between carrier pairs of the band A + band B in the band combination of the band A + band B + band C of the first communication system.

In addition, the indication information may further indicate to update a DAPS capability of per band combination. Therefore, the indication information is effective for the first band combination, that is, the indication information is applicable to the first band combination of the terminal device. It may also be understood as that the indication information indicates to update the DAPS capability of the terminal device in the first band combination in the first communication system. In a specific example, the first band combination may include a band in which the terminal device communicates with a source cell in the first communication system.

For example, the terminal device communicates with the source cell in the first communication system in a band A, and the indication information may indicate to update a DAPS capability of a band combination of band A + band B + band C. Correspondingly, after the first network device receives the indication information, it may be understood as that the terminal device does not support DAPS handover between carrier pairs in the band combination of the band A + band B + band C of the first communication system.

Optionally, the indication information may further indicate that a capability of intra-frequency DAPS handover and/or a capability of inter-frequency DAPS handover are updated. Specifically, the indication information may explicitly indicate that the indication information is effective for the intra-frequency DAPS handover and/or the inter-frequency DAPS handover, or may implicitly indicate that the indication information is effective for the intra-frequency DAPS handover and/or the inter-frequency DAPS handover.

When registering with a network, the terminal device reports a DAPS handover capability in UE capability information (UE capability information). In this embodiment of this application, the DAPS capability of the terminal device is indicated to be updated, so that a network device can indicate, based on an updated DAPS capability, the terminal device to perform handover, thereby avoiding a case in which the DAPS handover that the network device determines to perform for the terminal device exceeds a capability of the terminal device. In addition, in this embodiment of this application, the indication information may be effective for the terminal device, so that signaling overheads can be reduced. Alternatively, in this embodiment of this application, the indication information may be effective for one or more bands in the band combination, so that flexibility of updating the DAPS capability can be improved.

The following describes an example of update behaviors of the first event and the DAPS capability.

In an example description, the indication information may indicate to suspend the DAPS capability in the first communication system, or may indicate to resume the DAPS capability in the first communication system. Suspending the DAPS capability in the first communication system may be understood as disabling the DAPS capability in the first communication system, may be understood as temporarily limiting the DAPS capability in the first communication system, or may be understood as temporarily not supporting the DAPS capability in the first communication system. Correspondingly, resuming the DAPS capability in the first communication system may be understood as enabling the DAPS capability in the first communication system, may be understood as releasing a limitation on the DAPS capability in the first communication system, or may be understood as resuming the DAPS capability in the first communication system.

In a possible implementation, when the first event is any one of the following, the indication information may indicate to suspend the DAPS capability of the terminal device in the first communication system.

The first event is that the terminal device enters an RRC connected state in both the first communication system and a second communication system. Alternatively, the first event is that the terminal device is in a service receiving or sending state in one of the first communication system and the second communication system and is about to start or has started to perform service receiving or sending in the other communication system.

Alternatively, the first event is that a version of a network protocol used by the terminal device for communication in the first communication system and a version of a network protocol used by the terminal device for communication in the second communication system each are not earlier than a version of a 5G protocol. 5G is used as an example. The event may alternatively be described as follows: The terminal device uses 5G modes in both the first communication system and the second communication system for communication, the terminal device establishes connections to network devices in both the first communication system and the second communication system based on 5G protocols, or 5G switches are enabled for both a first user identity and a second user identity of the terminal device.

Alternatively, the first event is that an RRC configuration of the terminal device in the first communication system and an RRC configuration of the terminal device in the second communication system exceed a baseband capability and/or a radio frequency capability of the terminal device. For example, the event may be that a quantity of carriers occupied by the terminal device for communication in the first communication system and the second communication system has reached or is about to reach a maximum baseband processing capability of the terminal device. If a target cell for DAPS handover is added to the first communication system or the second communication system, the quantity of carriers occupied by the terminal device for communication in the first communication system and the second communication system is about to exceed the maximum baseband processing capability of the terminal device.

In another possible implementation, when the first event is any one of the following, the indication information may indicate to resume the DAPS capability of the terminal device in the first communication system.

The first event is that the terminal device leaves an RRC connected mode in the first communication system and/or a second communication system, or may be described as that the terminal device enters an idle mode or an inactive mode in the first communication system and/or the second communication system. Alternatively, the event may be understood as that the terminal device is in a service receiving or sending state in one of the first communication system and the second communication system and is about to stop or has stopped to perform service receiving or sending in the other communication system.

Alternatively, the first event is that a version of a network protocol used by the terminal device for communication in the first communication system and/or a version of a network protocol used by the terminal device for communication in the second communication system are/is earlier than a version of a 5G protocol. 5G is used as an example. The event may alternatively be described as follows: The terminal device performs communication by using 4G, 3G, or 2G in at least one of the first communication system and the second communication system, the terminal device establishes a connection to a network device by using a 4G, 3G, or 2G protocol in the at least one of the first communication system and the second communication system, or a 5G switch is disabled for the at least one of a first user identity and a second user identity of the terminal device.

Alternatively, the first event is that a capability that is of the terminal device and that is available for the first communication system supports DAPS handover between a source cell and a target cell in the first communication system. For example, the event may be that a quantity of carriers occupied by the terminal device for communication in the first communication system and the second communication system does not exceed a maximum baseband processing capability of the terminal device. If a target cell for DAPS handover is added to the first communication system or the second communication system, the quantity of carriers occupied by the terminal device for communication in the first communication system and the second communication system does not exceed the maximum baseband processing capability of the terminal device.

In this embodiment of this application, the DAPS capability of the terminal device is indicated to be updated, so that a network device can indicate, based on an updated DAPS capability, the terminal device to perform handover, thereby avoiding a case in which the DAPS handover that the network device determines to perform for the terminal device exceeds a capability of the terminal device. In addition, in this embodiment of this application, the indication information may be effective for the terminal device, so that signaling overheads can be reduced. Alternatively, in this embodiment of this application, the indication information may be effective for one or more bands in the band combination, so that flexibility of updating the DAPS capability can be improved.

The following provides another communication method. In the method, when a terminal device determines that DAPS handover in a first communication system and a communication behavior in another communication system have exceeded or are about to exceed a capability of the terminal device, the terminal device requests a scheduling interval in a second communication system, so that the DAPS handover in the first communication system is performed in the scheduling interval. In this manner, packet loss can be avoided during service transmission in the second communication system. The following specifically describes the communication method.

FIG. 7 is a schematic flowchart of a communication method according to this application. The method includes the following steps.

S701: A first network device sends a first message to a terminal device. Correspondingly, the terminal device receives the first message from the first network device. Specifically, the terminal device may receive the first message as a first user identity.

For S701, refer to related descriptions in S401. Details are not described herein again.

S702: The terminal device determines that a capability available for a first communication system cannot support DAPS handover.

For S702, refer to related descriptions in S402. Details are not described herein again.

S703: The terminal device sends a request message in a second communication system. Correspondingly, a third network device receives the request message from the terminal device. Specifically, the terminal device may send the request message to the third network device as a second user identity.

The third network device is a network device accessed by the terminal device in the second communication system, or may be understood as a network device accessed by the terminal device as the second user identity. The third network device and the first network device may be a same network device, or may be different network devices.

The request message is used to request a scheduling interval, or request to activate a configured scheduling interval. The third network device stops scheduling data for the terminal device in the scheduling interval.

The request message indicates at least one of the following: a purpose of requesting the scheduling interval, a band identifier corresponding to the scheduling interval, a cell group identifier corresponding to the scheduling interval, and a cell identifier corresponding to the scheduling interval. The purpose of requesting the scheduling interval may also be referred to as a reason for requesting the scheduling interval.

Optionally, the purpose of requesting the scheduling interval may be to perform the DAPS handover in the first communication system. In an implementation, the purpose of requesting the scheduling interval may be indicated by a cause value in the request message.

In an example description, the band identifier corresponding to the scheduling interval may be an identifier of a band that has a resource conflict with the DAPS handover in the first communication system. For example, it is assumed that a resource conflict exists between the DAPS handover in the first communication system and a service that is in a first band and that is in the second communication system, and the band identifier corresponding to the scheduling interval is an identifier of the first band.

The cell group identifier corresponding to the scheduling interval may be an identifier of a cell group that has a resource conflict with the DAPS handover in the first communication system. For example, it is assumed that a resource conflict exists between the DAPS handover in the first communication system and a service of a first secondary cell or a first secondary cell group in the second communication system, and the cell identifier corresponding to the scheduling interval is a first secondary cell identifier or a first secondary cell group identifier in the second communication system.

The cell identifier corresponding to the scheduling interval may be an identifier of a cell that has a resource conflict with the DAPS handover in the first communication system. For example, it is assumed that a resource conflict exists between the DAPS handover in the first communication system and a service of a primary cell in the second communication system, and the cell identifier corresponding to the scheduling interval is a primary cell identifier in the second communication system.

In addition, the request message may further indicate information such as start time of the scheduling interval and duration of the scheduling interval.

In an example, all or some of the foregoing information indicated by the request message may be preconfigured by the network device, for example, configured by the network device based on an RRC reconfiguration message. The terminal device may perform activation based on the request message. In this manner, the terminal device may send the request message to the network device more quickly through lower-layer signaling, without carrying configuration information of the scheduling interval, and the network device may alternatively quickly respond through the lower-layer signaling. Therefore, it can be ensured that the terminal device activates a scheduling slot in the first communication system before cell signal quality of the source cell in the first communication system is lower than a threshold, so that a second network device can release, more quickly, a resource required for the DAPS handover in the first communication system. This avoids a link drop caused by a radio link failure of a source primary cell group in the first communication system.

For example, the request message is a MAC CE or a physical layer message. Alternatively, the request message may be an RRC message.

In an implementation, when sending the request message, the terminal device may start a timer, which is a timer A below.

S704: After receiving, in the second communication system, a response message of the request message, the terminal device performs the DAPS handover in the first communication system. The DAPS handover performed in the first communication system may be performed in the scheduling interval.

In an implementation, the terminal device may receive the response message of the request message in the second communication system as the second user identity.

In a possible implementation, the terminal device may further determine that no response message is received within first duration (for example, a timing period of the timer A) after the request message is sent or that signal quality of the source cell in the first communication system is lower than a first threshold. In this case, the terminal device may perform the handover in the first communication system by using the method in FIG. 4 or FIG. 5, that is, may suspend communication with the source cell in the first communication system, and is handed over to a target cell in the first communication system. For a specific manner, refer to related descriptions in FIG. 4. Details are not described again.

In another possible implementation, the terminal device may further determine that no response message is received within first duration (for example, a timing period of the timer A) after the request message is sent or that signal quality of the source cell in the first communication system is lower than a first threshold. In this case, the terminal device may alternatively perform the DAPS handover in the first communication system, and interrupts data transmission on a first resource in the second communication system during execution of the DAPS handover in the first communication system, where a resource conflict exists between the data transmission on the first resource in the second communication system and the DAPS handover in the first communication system.

In this embodiment of this application, when a resource conflict exists between the DAPS handover in the first communication device and a service in the second communication system, the terminal device requests the scheduling interval from a network device of the second communication system, to pause service transmission in the second communication system, thereby avoiding packet loss during service transmission in the second communication system.

It should be noted that requesting the scheduling interval in the method in FIG. 7 may be an optional step. In specific implementation, the terminal device may alternatively perform the DAPS handover in the first communication system when determining that the capability available for the first communication system cannot support the DAPS handover, and pause the data transmission interrupted on the first resource of the second communication system during the DAPS handover of the first communication system.

Optionally, the terminal device may determine, based on information such as latency requirements or service priorities of services in the first communication system and the second communication system, to request a scheduling interval in the second communication system. For example, when a latency-sensitive service is performed in the first communication system, the terminal device may preferentially perform the DAPS handover in the first communication system, and interrupt transmission in the second communication system during the DAPS handover, to ensure that a latency requirement of a service in a first communication network is met.

To better understand the solutions provided in this application, the following describes an example of a handover process.

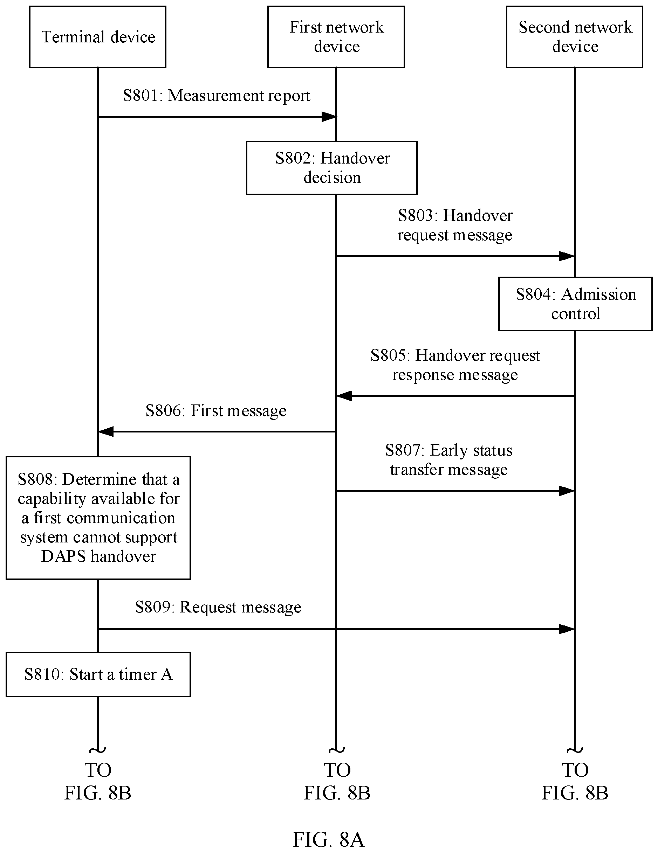

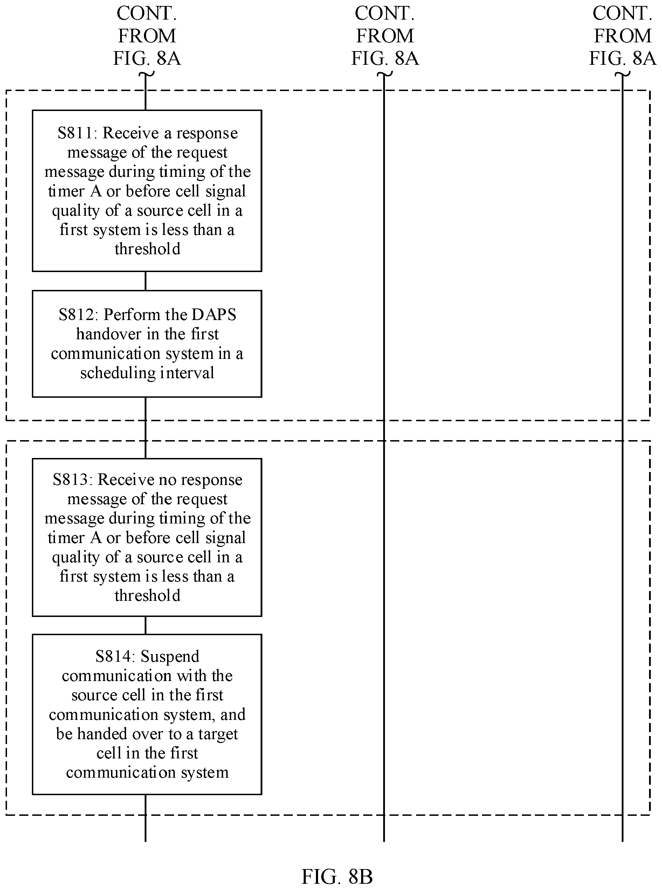

As shown in FIG. 8A and FIG. 8B, a handover process includes the following steps.

S801: A terminal device sends a measurement report to a first network device. The measurement report may carry a measurement result of a serving cell and at least one neighboring cell.

S802: The first network device makes a handover decision.

S803: The first network device sends a handover request message to a second network device.

S804: The second network device performs admission control.

S805: The second network device sends a handover request response message to the first network device.

S806: The first network device sends a first message to the terminal device.

S807: The first network device sends an early status transfer message to a second network device.

S808: The terminal device determines that a capability available for a first communication system cannot support DAPS handover.

For details about steps S801 to S808, refer to related descriptions of S501 to S508 in the method in FIG. 5. Details are not described again.

S809: The terminal device sends a request message to a third network device.

The request message is used to request a scheduling interval. For the request message, refer to related descriptions of the request message in S703. Details are not described herein again.

S810: The terminal device starts a timer A. S811 and S812 are performed, or S813 is performed.

S811: The terminal device receives a response message of the request message during timing of the timer A or before cell signal quality of a source cell in a first system is less than a threshold.

S812: The terminal device performs the DAPS handover in the first communication system in the scheduling interval.

S813: The terminal device receives no response message of the request message during timing of the timer A or before cell signal quality of a source cell in a first system is less than a threshold.

S814: The terminal device suspends communication with the source cell in the first communication system, and is handed over to a target cell in the first communication system.

For details of S814, refer to related descriptions of S509 to S516 in FIG. 5. Details are not described herein again.

In this embodiment of this application, when a resource conflict exists between the DAPS handover in the first communication device and a service in the second communication system, the terminal device requests the scheduling interval from a network device of the second communication system, to pause service transmission in the second communication system, thereby avoiding packet loss during service transmission in the second communication system.

The following provides another communication method. In the method, when a terminal device receives, in a first communication system, an indication for performing DAPS handover, and also receives, in a second communication system, an indication for performing DAPS handover, DAPS handover priorities of the two communication systems are determined based on a service in the first communication system and a service in the second communication system or receiving time of a first message and receiving time of a second message, and handover behaviors in the two communication systems are determined based on the priorities. In this way, cases such as interruption or packet loss can be avoided in the communication behaviors in the two communication systems. The following specifically describes the communication method.

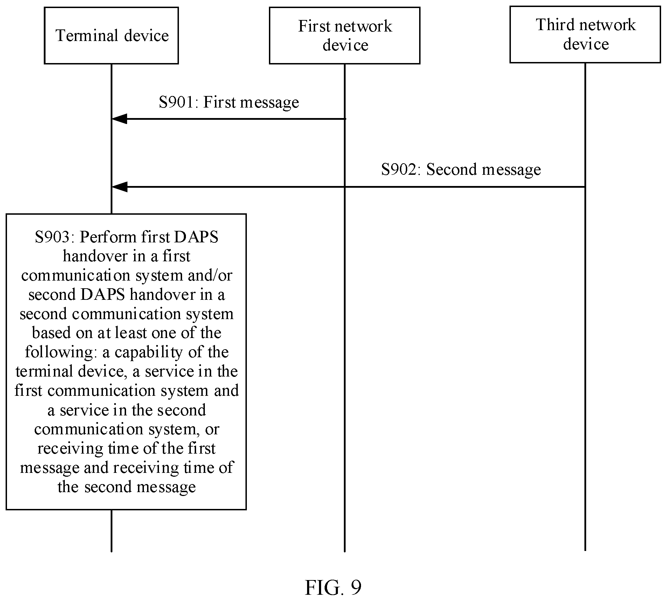

FIG. 9 is a schematic flowchart of a communication method according to this application. The method includes the following steps.

S901: A terminal device receives a first message in a first communication system. Specifically, the terminal device may receive the first message as a first user identity.

The first message indicates the terminal device to perform first DAPS handover between a first source cell and a first target cell in the first communication system.

S902: The terminal device receives a second message in a second communication system. Specifically, the terminal device may receive the second message as a second user identity.

The second message indicates the terminal device to perform second DAPS handover between a second source cell and a second target cell in the second communication system, and the second communication system corresponds to the second user identity.

In an implementation, after receiving the first message and before being handed over to the first target cell in the first communication system, the terminal device may receive the second message. For example, the terminal device receives the second message during the first DAPS handover in the first communication system. Alternatively, after receiving the second message and before being handed over to the second target cell in the second communication system, the terminal device receives the first message. For example, the terminal device receives the first message during the second DAPS handover in the second communication system.

In another implementation, the terminal device may also receive both the first message and the second message.

S903: The terminal device performs first DAPS handover in the first communication system and/or second DAPS handover in the second communication system based on at least one of the following: a capability of the terminal device, a service in the first communication system and a service in the second communication system, or receiving time of the first message and receiving time of the second message.

For the capability of the terminal device, refer to the description of the capability of the terminal device in FIG. 4. Details are not repeated.

In an implementation, the terminal device may determine a priority of the DAPS handover in the first communication system and a priority of the DAPS handover in the second communication system according to at least one of the following: the capability of the terminal device, the service in the first communication system and the service in the second communication system, or the receiving time of the first message and the receiving time of the second message. The terminal device may first perform DAPS handover with a high priority, and after performing the DAPS handover with the high priority, perform another DAPS handover. For example, it is assumed that the priority of the first DAPS handover in the first communication system is higher than the priority of the second DAPS handover in the second communication system, the terminal device may first perform the first DAPS handover in the first communication system, and after performing the first DAPS handover in the first communication system, perform the second DAPS handover in the second communication system.

In another implementation, the terminal device may determine a priority of the DAPS handover in the first communication system and a priority of the DAPS handover in the second communication system according to at least one of the following: the capability of the terminal device, the service in the first communication system and the service in the second communication system, or the receiving time of the first message and the receiving time of the second message. For DAPS handover with a high priority, the terminal device may perform DAPS handover in a corresponding communication system. For DAPS handover with a low priority, the terminal device may suspend communication with a source cell in a corresponding communication system, and perform basic handover. For example, it is assumed that the priority of the first DAPS handover in the first communication system is higher than the priority of the second DAPS handover in the second communication system, the terminal device may perform DAPS handover in the first communication system, interrupt communication with the second source cell in the second communication system, and is handed over to the second target cell, that is, performs basic handover in the second communication system. For the handover behavior in the second communication system, refer to related descriptions in FIG. 4 or FIG. 5. Details are not described herein again.

Based on any one of the foregoing two implementations, when the first communication system satisfies at least one of the following, the priority of the first DAPS handover in a first system is higher than the priority of the second DAPS handover in the second communication system: the receiving time of the first message and the receiving time of the second message satisfy a preset relationship, a priority of the service in the first communication system is higher than a priority of the service in the second communication system, or a latency requirement of the service in the first communication system is higher than a latency requirement of the service in the second communication system. A higher latency requirement of the service may be understood as a shorter latency requirement for the service.

For example, the preset relationship may be: the receiving time of the first message is earlier than the receiving time of the second message.

Alternatively, the preset relationship may be: the receiving time of the second message is earlier than the receiving time of the first message.

The following uses an example in which the priority of the first DAPS handover in a first system and the priority of the second DAPS handover in the second communication system are determined based on the receiving time of the first message and the receiving time of the second message for description.

In a specific example, for a communication system corresponding to a message that is in the first message and the second message and that is received later, the terminal device may perform handover by using the method in Embodiment 1, and may perform DAPS handover in the other communication system.

In another specific example, for a communication system corresponding to a message that is in the first message and the second message and that is received earlier, the terminal device may perform handover by using the method in Embodiment 1, and may perform DAPS handover in the other communication system.

In another specific example, for a communication system corresponding to a message that is in the first message and the second message and that is received earlier, the terminal device may first perform DAPS handover in the communication system, and after performing the DAPS handover in the communication system, perform DAPS handover in the other communication system.

In another specific example, for a communication system corresponding to a message that is in the first message and the second message and that is received later, the terminal device may first perform DAPS handover in the communication system, and after performing the DAPS handover in the communication system, perform DAPS handover in the other communication system.

In a possible scenario, the capability of the terminal device can support DAPS handover only in one communication system, and non-DAPS handover in the other communication system. Alternatively, it may be understood as that the capability of the terminal device can only support receiving downlink data and/or sending uplink data with both a source cell and a target cell during handover in one communication system, and receiving downlink data and/or sending uplink data with a cell (for example, the target cell) during handover in the other communication system.

To better understand the solutions provided in this application, the following describes an example of a handover process.

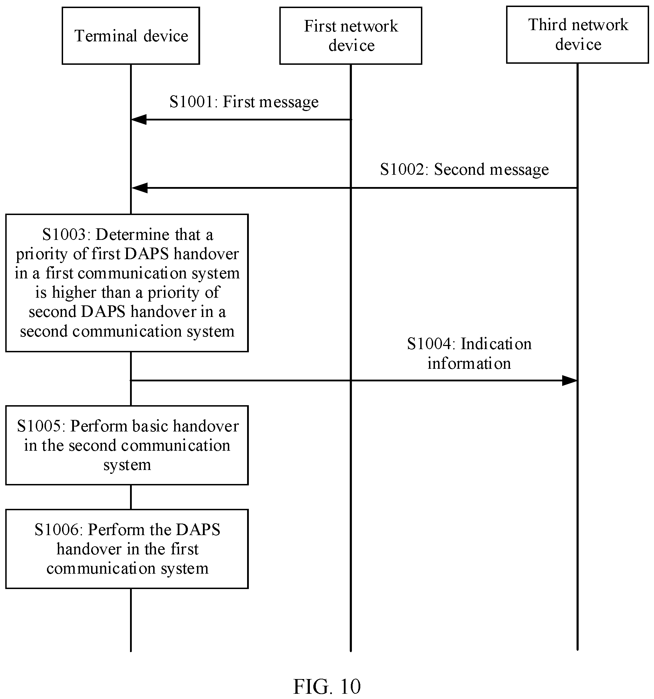

As shown in FIG. 10, a handover process includes the following steps.

S1001: A first network device sends a first message to a terminal device in a first communication system.

The first network device is a network device accessed by the terminal device in the first communication system, or may be understood as a network device accessed by the terminal device as a first user identity.

For the first message, refer to related descriptions of the first message in FIG. 4.

Optionally, after step S1001, the first network device may send an early status transfer (early status transfer) message to a second network device.

The second network device may be a network device that is about to be accessed by the terminal device in the first communication system, or may be understood as a network device corresponding to a target cell (namely, a first target cell) of the terminal device in the first communication system.

S 1002: A third network device sends a second message to the terminal device in a second communication system.

The third network device is a network device accessed by the terminal device in the second communication system, or may be understood as a network device accessed by the terminal device as a second user identity.

The second message is similar to the first message. For details, refer to related descriptions of the first message in FIG. 4.

Optionally, after step S1002, the third network device may send an early state transfer message to a fourth network device.

The fourth network device may be a network device that is about to be accessed by the terminal device in the second communication system, or may be understood as a network device corresponding to a target cell (namely, a second target cell) of the terminal device in the second communication system.

S1003: The terminal device determines that a priority of first DAPS handover in the first communication system is higher than a priority of second DAPS handover in the second communication system.

For details of S 1003, refer to related descriptions of S903. Details are not repeated.

S 1004: The terminal device sends indication information to the third network device.

For details of the indication information, refer to related descriptions of the first indication information in the method in FIG. 4.

S1005: The terminal device performs basic handover in the second communication system.

Specifically, the terminal device may suspend communication with a second source cell in the second communication system, and is handed over to a second target cell.

For details of S1005, refer to related descriptions in S403 and S404 in the method in FIG. 4. Details are not described herein again.

S1006: The terminal device performs the DAPS handover in the first communication system.

It should be noted that an execution sequence of S1004 and S1005, and S1006 is not limited in this application.

In this embodiment of this application, priorities of the DAPS handover in the two communication systems are determined, and handover behaviors in the two communication systems are determined based on the priorities, so that cases such as interruption or packet loss can be avoided occurring in the communication behaviors in the two communication systems. In this application, DAPS handover of a communication system with a high service priority and a high service latency requirement is preferentially performed, so that user experience can be improved.

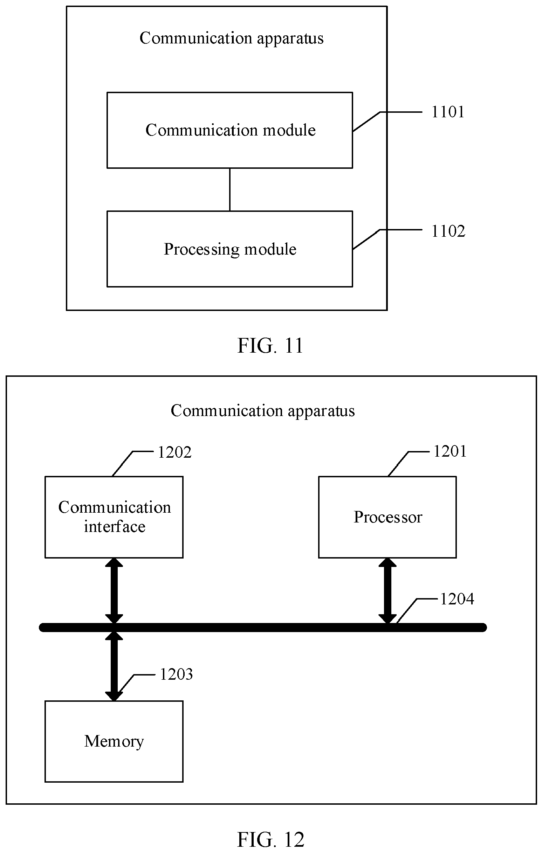

Based on a same concept as the method embodiments, an embodiment of this application provides a communication apparatus. A structure of the communication apparatus may be shown in FIG. 11, and the communication apparatus includes a communication module 1101 and a processing module 1102.

In an implementation, the communication apparatus may be specifically configured to implement the method performed by the terminal device in the embodiment in FIG. 4. The apparatus may be the terminal device, or may be a chip or a chip set in the terminal device, or a part that is in a chip and that is configured to perform a related method function. The communication module 1101 is configured to receive a first message in a first communication system, where the first message indicates the terminal device to perform DAPS handover between a source cell and a target cell in the first communication system. The processing module 1102 is configured to: determine that a capability available for the first communication system cannot support the DAPS handover, where a capability of the terminal device is used for communication in the first communication system and a second communication system, the first communication system corresponds to a first user identity, and the second communication system corresponds to a second user identity; and suspend communication with the source cell in the first communication system, and be handed over to the target cell in the first communication system.

Optionally, when determining that the capability available for the first communication system cannot support the DAPS handover, the processing module 1102 is specifically configured to determine that a carrier aggregation capability and/or a dual-connectivity capability that are available for the first communication system cannot support the DAPS handover.

Optionally, the first message carries configuration information of N radio bearers, the configuration information of the N radio bearers carries DAPS configurations, and N is an integer greater than 0. The processing module 1102 is further configured to skip configuring the N radio bearers as DAPS bearers.

Optionally, when suspending communication with the source cell in the first communication system, the processing module 1102 is specifically configured to: release an RRC connection to the source cell; suspend transmission and reception of a DRB in a source primary cell group; and/or determine that a radio link failure occurs in a source primary cell or the source primary cell group in the first communication system.

Optionally, the communication module 1101 is further configured to send indication information to the source cell in the first communication system, where the indication information indicates that communication with the source cell has been suspended or is about to be suspended.

In an implementation, the communication apparatus may be specifically configured to implement the method performed by the first network device in the embodiment in FIG. 4. The apparatus may be the network device, or may be a chip or a chip set in the network device, or a part that is in a chip and that is configured to perform a related method function. The communication module 1101 is configured to: send a first message to a terminal device, where the first message indicates the terminal device to perform DAPS handover between a source cell and a target cell, and the source cell belongs to the first network device; and receive first indication information sent by the terminal device, where the first indication information indicates that communication with the source cell has been suspended or is about to be suspended. The processing module 1102 is configured to stop data scheduling performed on the terminal device in the source cell.

Optionally, the communication module 1101 is further configured to send second indication information to a second network device, where the second indication information indicates that the terminal device has suspended or is about to suspend communication with the source cell, and the target cell belongs to the second network device.

In an implementation, the communication apparatus may be specifically configured to implement the method performed by the terminal device in the embodiment in FIG. 6. The apparatus may be the terminal device, or may be a chip or a chip set in the terminal device, or a part that is in a chip and that is configured to perform a related method function. The processing module 1102 is configured to determine that a first event occurs. The communication module 1101 is configured to send indication information in a first communication system, where the indication information is used to update a DAPS capability of the terminal device in the first communication system, and the indication information is effective for any band combination of the terminal device, or the indication information is effective for a first band in a first band combination. The terminal device supports communication in the first communication system and a second communication system, the first communication system corresponds to a first user identity, and the second communication system corresponds to a second user identity.

In an implementation, the communication apparatus may be specifically configured to implement the method performed by the terminal device in the embodiment in FIG. 7. The apparatus may be the terminal device, or may be a chip or a chip set in the terminal device, or a part that is in a chip and that is configured to perform a related method function. The communication module 1101 is configured to receive a first message in a first communication system, where the first message indicates the terminal device to perform DAPS handover between a source cell and a target cell in the first communication system. The processing module 1102 is configured to: determine that a capability available for the first communication system cannot support the DAPS handover, where a capability of the terminal device is used for communication in the first communication system and a second communication system, the first communication system corresponds to a first user identity, and the second communication system corresponds to a second user identity. The communication module 1101 is further configured to: send a request message in the second communication system, where the request message is used to request a scheduling interval, and the request message indicates at least one of the following: a purpose of requesting the scheduling interval, a band identifier corresponding to the scheduling interval, a cell group identifier corresponding to the scheduling interval, and a cell identifier corresponding to the scheduling interval; and after receiving, in the second communication system, a response message of the request message, perform the DAPS handover in the first communication system in the scheduling interval.

Optionally, the processing module 1102 is further configured to: determine that no response message is received within first duration after the request message is sent or that signal quality of the source cell in the first communication system is lower than a first threshold; suspend communication with the source cell in the first communication system; and be handed over to the target cell in the first communication system.

Optionally, the communication module 1101 is further configured to send indication information to the source cell in the first communication system, where the indication information indicates that communication with the source cell has been suspended or is about to be suspended.

Optionally, the processing module 1102 is further configured to: determine that no response message is received within first duration after the request message is sent or that signal quality of the source cell in the first communication system is lower than a first threshold; and perform the DAPS handover in the first communication system, and interrupt data transmission on a first resource in the second communication system during execution of the DAPS handover in the first communication system, where a resource conflict exists between the data transmission on the first resource in the second communication system and the DAPS handover in the first communication system.

In an implementation, the communication apparatus may be specifically configured to implement the method performed by the terminal device in the embodiment in FIG. 9. The apparatus may be the terminal device, or may be a chip or a chip set in the terminal device, or a part that is in a chip and that is configured to perform a related method function. The communication module 1101 is configured to: receive a first message in a first communication system, where the first message indicates the terminal device to perform first DAPS handover between a first source cell and a first target cell in the first communication system, and the first communication system corresponds to a first user identity; and receive a second message in a second communication system, where the second message indicates the terminal device to perform second DAPS handover between a second cell and a second target cell in the second communication system, and the second communication system corresponds to a second user identity. The processing module 1102 is configured to perform the first DAPS handover in the first communication system and/or the second DAPS handover in the second communication system according to at least one of the following: a capability of the terminal device, a service in the first communication system and a service in the second communication system, or receiving time of the first message and receiving time of the second message.

Optionally, that the processing module 1102 is specifically configured to perform the first DAPS handover in the first communication system and/or the second DAPS handover in the second communication system according to at least one of the following: a capability of the terminal device, a service in the first communication system and a service in the second communication system, or receiving time of the first message and receiving time of the second message includes: The terminal device determines that a priority of the first DAPS handover in the first communication system is higher than a priority of the second DAPS handover in the second communication system according to at least one of the following: the capability of the terminal device, the service in the first communication system and the service in the second communication system, or the receiving time of the first message and the receiving time of the second message; performs the first DAPS handover in the first communication system; and performs the second DAPS handover in the second communication system after performing the first DAPS handover.

Optionally, that the processing module 1102 is specifically configured to perform the first DAPS handover in the first communication system and/or the second DAPS handover in the second communication system according to at least one of the following: a capability of the terminal device, a service in the first communication system and a service in the second communication system, or receiving time of the first message and receiving time of the second message includes: The terminal device determines that a priority of the first DAPS handover in the first communication system is higher than a priority of the second DAPS handover in the second communication system according to at least one of the following: the capability of the terminal device, the service in the first communication system and the service in the second communication system, or the receiving time of the first message and the receiving time of the second message; performs the first DAPS handover in the first communication system; suspends communication with the second source cell in the second communication system; and is handed over to the second target cell in the second communication system.

Optionally, when determining that the priority of the first DAPS handover in the first communication system is higher than the priority of the second DAPS handover in the second communication system according to at least one of the following: a hardware capability of the terminal device, the service in the first communication system and the service in the second communication system, or the receiving time of the first message and the receiving time of the second message, the processing module 1102 is specifically configured to: determine that at least one of the following is satisfied: the receiving time of the first message and the receiving time of the second message satisfy a preset relationship, a priority of the service in the first communication system is higher than a priority of the service in the second communication system, or a latency requirement of the service in the first communication system is higher than a latency requirement of the service in the second communication system; and determine that at least one of the following is satisfied: the receiving time of the first message and the receiving time of the second message satisfy a preset relationship, a priority of the service in the first communication system is higher than a priority of the service in the second communication system, or a latency requirement of the service in the first communication system is higher than a latency requirement of the service in the second communication system.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module. It may be understood that for functions or implementations of the modules in embodiments of this application, further refer to related description in the method embodiments.

In a possible manner, the communication apparatus may be shown in FIG. 12. The apparatus may be a communication device or a chip in the communication device. The communication device may be the terminal device in the foregoing embodiment or the network device in the foregoing embodiment. The apparatus includes a processor 1201 and a communication interface 1202, and may further include a memory 1203. The processing module 1102 may be the processor 1201. The communication module 1101 may be the communication interface 1202.

The processor 1201 may be a CPU, a digital processing unit, or the like. The communication interface 1202 may be a transceiver, an interface circuit such as a transceiver circuit, a transceiver chip, or the like. The apparatus further includes the memory 1203, configured to store a program executed by the processor 1201. The memory 1203 may be a nonvolatile memory, for example, a hard disk drive (hard disk drive, HDD) or a solid-state drive (solid-state drive, SSD), or may be a volatile memory (volatile memory), for example, a random access memory (random access memory, RAM). The memory 1203 is any other medium that can be used to carry or store expected program code in a form of an instruction structure or a data structure and that can be accessed by a computer, but is not limited thereto.

The processor 1201 is configured to execute the program code stored in the memory 1203, and is specifically configured to perform an action of the processing module 1102. Details are not described in this application again. The communication interface 1202 is specifically configured to perform an action of the communication module 1101. Details are not described herein again in this application.

In embodiments of this application, a specific connection medium between the communication interface 1202, the processor 1201, and the memory 1203 is not limited. According to embodiments of this application, in FIG. 12, the memory 1203, the processor 1201, and the communication interface 1202 are connected to each other through a bus 1204. The bus is represented by using a thick line in FIG. 12. A manner of connection between other components is merely an example for description, but is not used as a limitation. Buses may be classified into an address bus, a data bus, a control bus, and the like. For ease of representation, only one bold line is used to represent the system bus in FIG. 12, but this does not mean that there is only one bus or only one type of bus.

An embodiment of this application further provides a computer-readable storage medium, configured to store computer software instructions that need to be performed by the foregoing processor. The computer software instructions include a program that needs to be performed by the foregoing processor.

An embodiment of this application further provides a communication system. The communication system includes a communication apparatus configured to implement a function of the terminal device in the embodiment in FIG. 4 and a communication apparatus configured to implement a function of the first network device in the embodiment in FIG. 4.

An embodiment of this application further provides a communication system. The communication system includes a communication apparatus configured to implement a function of the terminal device in the embodiment in FIG. 6, a communication apparatus configured to implement a function of the first network device in the embodiment in FIG. 6, and a communication apparatus configured to implement a function of the third network device in the embodiment in FIG. 6.

An embodiment of this application further provides a communication system. The communication system includes a communication apparatus configured to implement a function of the terminal device in the embodiment in FIG. 7 and a communication apparatus configured to implement a function of the first network device in the embodiment in FIG. 7.

An embodiment of this application further provides a communication system. The communication system includes a communication apparatus configured to implement a function of the terminal device in the embodiment in FIG. 9, a communication apparatus configured to implement a function of the first access network device in the embodiment in FIG. 9, and a communication apparatus configured to implement a function of the third network device in the embodiment in FIG. 9.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

## Claims

1. A communication method, wherein the method comprises:
receiving, by a terminal device, a first message in a first communication system, wherein the first message indicates the terminal device to perform dual active protocol stack DAPS handover between a source cell and a target cell in the first communication system;
determining, by the terminal device, that a capability available for the first communication system is incapable of supporting the DAPS handover, wherein a capability of the terminal device is used for communication in the first communication system and a second communication system, the first communication system corresponds to a first user identity, and the second communication system corresponds to a second user identity;
suspending, by the terminal device, communication with the source cell in the first communication system; and
being handed over, by the terminal device, to the target cell in the first communication system.

2. The method according to claim 1, wherein the determining, by the terminal device, that a capability available for the first communication system is incapable of supporting the DAPS handover comprises:
determining, by the terminal device, that a carrier aggregation capability and/or a dual-connectivity capability that are available for the first communication system are/is incapable of supporting the DAPS handover.

3. The method according to claim 1 or 2, wherein the first message carries configuration information of N radio bearers, the configuration information of the N radio bearers carries DAPS configurations, and N is an integer greater than 0; and
the method further comprises:
skipping configuring the N radio bearers as DAPS bearers.

4. The method according to any one of claims 1 to 3, wherein the suspending, by the terminal device, communication with the source cell in the first communication system comprises:
releasing, by the terminal device, a radio resource control RRC connection to the source cell;
suspending, by the terminal device, transmission and reception of a data radio bearer DRB in a source primary cell group; and/or
determining, by the terminal device, that a radio link failure occurs in a source primary cell or the source primary cell group in the first communication system.

5. The method according to any one of claims 1 to 4, wherein the method further comprises:
if the terminal device successfully accesses the target cell, sending, by the terminal device, first information to the target cell, wherein the first information indicates that the terminal device suspends communication with the source cell due to a resource conflict.

6. The method according to any one of claims 1 to 5, wherein the method further comprises:
sending, by the terminal device, indication information to the source cell in the first communication system, wherein the indication information indicates that communication with the source cell has been suspended or is about to be suspended.

7. A communication method, wherein the method comprises:
sending, by a first network device, a first message to a terminal device, wherein the first message indicates the terminal device to perform dual active protocol stack DAPS handover between a source cell and a target cell, and the source cell belongs to the first network device;
receiving, by the first network device, first indication information from the terminal device, wherein the first indication information indicates that communication with the source cell has been suspended or is about to be suspended; and
stopping, by the first network device, data scheduling performed on the terminal device in the source cell.

8. The method according to claim 7, wherein the method further comprises:
sending, by the first network device, second indication information to a second network device, wherein the second indication information indicates that the terminal device has suspended or is about to suspend communication with the source cell, and the target cell belongs to the second network device.

9. The method according to claim 8, wherein the second indication information is sent to the second network device through a sequence number status transfer message.

10. A communication method, wherein the method comprises:
receiving, by a terminal device, a first message in a first communication system, wherein the first message indicates the terminal device to perform dual active protocol stack DAPS handover between a source cell and a target cell in the first communication system;
determining, by the terminal device, that a capability available for the first communication system is incapable of supporting the DAPS handover, wherein a capability of the terminal device is used for communication in the first communication system and a second communication system, the first communication system corresponds to a first user identity, and the second communication system corresponds to a second user identity;
sending, by the terminal device, a request message in the second communication system, wherein the request message is used to request a scheduling interval, and the request message indicates at least one of the following: a purpose of requesting the scheduling interval, a band identifier corresponding to the scheduling interval, a cell group identifier corresponding to the scheduling interval, and a cell identifier corresponding to the scheduling interval; and
after receiving, in the second communication system, a response message of the request message, performing, by the terminal device, the DAPS handover in the first communication system in the scheduling interval.

11. The method according to claim 10, wherein the method further comprises:
determining, by the terminal device, that no response message is received within first duration after the request message is sent or that signal quality of the source cell in the first communication system is lower than a first threshold;
suspending, by the terminal device, communication with the source cell in the first communication system; and
being handed over, by the terminal device, to the target cell in the first communication system.

12. The method according to claim 11, wherein the method further comprises:
sending, by the terminal device, indication information to the source cell in the first communication system, wherein the indication information indicates that communication with the source cell has been suspended or is about to be suspended.

13. The method according to claim 10, wherein the method further comprises:
determining, by the terminal device, that no response message is received within first duration after the request message is sent or that signal quality of the source cell in the first communication system is lower than a first threshold; and
performing, by the terminal device, the DAPS handover in the first communication system, and interrupting data transmission on a first resource in the second communication system during execution of the DAPS handover in the first communication system, wherein a resource conflict exists between the data transmission on the first resource in the second communication system and the DAPS handover in the first communication system.

14. The method according to any one of claims 10 to 13, wherein the request message is a media access control MAC control element CE or a physical layer message.

15. The method according to any one of claims 10 to 14, wherein a resource conflict exists between the DAPS handover in the first communication system and a service of a primary cell in the second communication system, and the cell identifier corresponding to the scheduling interval is a primary cell identifier in the second communication system;
a resource conflict exists between the DAPS handover in the first communication system and a service of a first secondary cell or a first secondary cell group in the second communication system, and the cell identifier corresponding to the scheduling interval is a first secondary cell identifier or a first secondary cell group identifier in the second communication system; and/or
a resource conflict exists between the DAPS handover in the first communication system and a service that is in a first band and that is in the second communication system, and the band identifier corresponding to the scheduling interval is an identifier of the first band.

16. The method according to any one of claims 10 to 15, wherein the purpose of requesting the scheduling interval is to perform the DAPS handover in the first communication system.

17. A communication method, wherein the method comprises:
determining, by a terminal device, that a first event occurs; and
sending, by the terminal device, indication information in a first communication system, wherein
the indication information is used to update a dual active protocol stack DAPS capability of the terminal device in the first communication system, and the indication information is effective for any band combination of the terminal device, or the indication information is effective for a first band in a first band combination; and
the terminal device supports communication in the first communication system and a second communication system, the first communication system corresponds to a first user identity, and the second communication system corresponds to a second user identity.

18. The method according to claim 17, wherein the indication information further indicates that the indication information is effective for intra-frequency DAPS handover and/or for inter-frequency DAPS handover.

19. The method according to claim 17 or 18, wherein the indication information indicates to suspend the DAPS capability in the first communication system; and
the first event is that the terminal device enters a radio resource control RRC connected state in both the first communication system and the second communication system; the first event is that a version of a network protocol of the first communication system and a version of a network protocol of the second communication system each are not earlier than a version of a 5G protocol; or the first event is that an RRC configuration in the first communication system and an RRC configuration in the second communication system exceed a baseband capability and/or a radio frequency capability of the terminal device.

20. The method according to claim 17 or 18, wherein the indication information indicates to resume the DAPS capability in the first communication system; and
the first event is that the terminal device leaves an RRC connected state in the first communication system and/or the second communication system; the first event is that a version of a network protocol of the first communication system and/or a version of a network protocol of the second communication system are/is earlier than a version of a 5G protocol; or the first event is that a capability available for the first communication system supports DAPS handover between a source cell and a target cell in the first communication system.

21. A communication method, wherein the method comprises:
receiving, by a terminal device, a first message in a first communication system, wherein the first message indicates the terminal device to perform first dual active protocol stack DAPS handover between a first source cell and a first target cell in the first communication system, and the first communication system corresponds to a first user identity;
receiving, by the terminal device, a second message in a second communication system, wherein the second message indicates the terminal device to perform second DAPS handover between a second source cell and a second target cell in the second communication system, and the second communication system corresponds to a second user identity; and
performing, by the terminal device, the first DAPS handover in the first communication system and/or the second DAPS handover in the second communication system according to at least one of the following: a capability of the terminal device, a service in the first communication system and a service in the second communication system, or receiving time of the first message and receiving time of the second message.

22. The method according to claim 21, wherein the performing, by the terminal device, the first DAPS handover in the first communication system and/or the second DAPS handover in the second communication system according to at least one of the following: a capability of the terminal device, a service in the first communication system and a service in the second communication system, or receiving time of the first message and receiving time of the second message comprises:
determining, by the terminal device, that a priority of the first DAPS handover in the first communication system is higher than a priority of the second DAPS handover in the second communication system according to at least one of the following: the capability of the terminal device, the service in the first communication system and the service in the second communication system, or the receiving time of the first message and the receiving time of the second message;
performing, by the terminal device, the first DAPS handover in the first communication system; and
performing, by the terminal device, the second DAPS handover in the second communication system after performing the first DAPS handover.

23. The method according to claim 21, wherein the performing, by the terminal device, the first DAPS handover in the first communication system and/or the second DAPS handover in the second communication system according to at least one of the following: a capability of the terminal device, a service in the first communication system and a service in the second communication system, or receiving time of the first message and receiving time of the second message comprises:
determining, by the terminal device, that a priority of the first DAPS handover in the first communication system is higher than a priority of the second DAPS handover in the second communication system according to at least one of the following: the capability of the terminal device, the service in the first communication system and the service in the second communication system, or the receiving time of the first message and the receiving time of the second message;
performing, by the terminal device, the first DAPS handover in the first communication system;
suspending, by the terminal device, communication with the second source cell in the second communication system; and
being handed over, by the terminal device, to the second target cell in the second communication system.

24. The method according to claim 21, wherein the performing, by the terminal device, the first DAPS handover in the first communication system and/or the second DAPS handover in the second communication system according to at least one of the following: a capability of the terminal device, a service in the first communication system and a service in the second communication system, or receiving time of the first message and receiving time of the second message comprises:
determining, by the terminal device, that at least one of the following is satisfied: the receiving time of the first message and the receiving time of the second message satisfy a preset relationship, a priority of the service in the first communication system is higher than a priority of the service in the second communication system, or a latency requirement of the service in the first communication system is higher than a latency requirement of the service in the second communication system; and
determining, by the terminal device, that a priority of the first DAPS handover in the first communication system is higher than a priority of the second DAPS handover in the second communication system.

25. The method according to claim 24, wherein the preset relationship is: the receiving time of the first message is earlier than the receiving time of the second message; or the receiving time of the second message is earlier than the receiving time of the first message.

26. A communication apparatus, wherein the apparatus comprises:
a transceiver module, configured to receive a first message in a first communication system, wherein the first message indicates a terminal device to perform dual active protocol stack DAPS handover between a source cell and a target cell in the first communication system; and
a communication module, further configured to: determine that a capability available for the first communication system is incapable of supporting the DAPS handover, wherein a capability of the terminal device is used for communication in the first communication system and a second communication system, the first communication system corresponds to a first user identity, and the second communication system corresponds to a second user identity;
suspend communication with the source cell in the first communication system; and
be handed over to the target cell in the first communication system.

27. The apparatus according to claim 26, wherein when determining that the capability available for the first communication system is incapable of supporting the DAPS handover, the communication module is specifically configured to:
determine that a carrier aggregation capability and/or a dual-connectivity capability that are available for the first communication system are/is incapable of supporting the DAPS handover.

28. The apparatus according to claim 26 or 27, wherein the first message carries configuration information of N radio bearers, the configuration information of the N radio bearers carries DAPS configurations, and N is an integer greater than 0; and
the communication module is further configured to:
skip configuring the N radio bearers as DAPS bearers.

29. The apparatus according to any one of claims 26 to 28, wherein when suspending communication with the source cell in the first communication system, the communication module is specifically configured to:
release a radio resource control RRC connection to the source cell;
suspend transmission and reception of a data radio bearer DRB in a source primary cell group; and/or
determine that a radio link failure occurs in a source primary cell or the source primary cell group in the first communication system.

30. The apparatus according to any one of claims 26 to 29, wherein the communication module is further configured to:
if the communication module successfully accesses the target cell, send first information to the target cell, wherein the first information indicates that the terminal device suspends communication with the source cell due to a resource conflict.

31. The apparatus according to any one of claims 26 to 30, wherein the communication module is further configured to:
send indication information to the source cell in the first communication system, wherein the indication information indicates that communication with the source cell has been suspended or is about to be suspended.

32. A communication apparatus, wherein the apparatus comprises:
a transceiver module, configured to: send a first message to a terminal device, wherein the first message indicates the terminal device to perform dual active protocol stack DAPS handover between a source cell and a target cell, and the source cell belongs to the first network device; and
receive first indication information from the terminal device, wherein the first indication information indicates that communication with the source cell has been suspended or is about to be suspended; and
a communication module, configured to stop data scheduling performed on the terminal device in the source cell.

33. The apparatus according to claim 32, wherein the transceiver module is further configured to:
send second indication information to a second network device, wherein the second indication information indicates that the terminal device has suspended or is about to suspend communication with the source cell, and the target cell belongs to the second network device.

34. The apparatus according to claim 33, wherein the second indication information is sent to the second network device through a sequence number status transfer message.

35. A communication apparatus, wherein the apparatus comprises:
a transceiver module, configured to receive a first message in a first communication system, wherein the first message indicates a terminal device to perform dual active protocol stack DAPS handover between a source cell and a target cell in the first communication system; and
a communication module, configured to determine that a capability available for the first communication system is incapable of supporting the DAPS handover, wherein a capability of the terminal device is used for communication in the first communication system and a second communication system, the first communication system corresponds to a first user identity, and the second communication system corresponds to a second user identity, wherein
the transceiver module is further configured to: send a request message in the second communication system, wherein the request message is used to request a scheduling interval, and the request message indicates at least one of the following: a purpose of requesting the scheduling interval, a band identifier corresponding to the scheduling interval, a cell group identifier corresponding to the scheduling interval, and a cell identifier corresponding to the scheduling interval; and
after receiving, in the second communication system, a response message of the request message, perform the DAPS handover in the first communication system in the scheduling interval.

36. The apparatus according to claim 35, wherein the communication module is further configured to:
determine that no response message is received within first duration after the request message is sent or that signal quality of the source cell in the first communication system is lower than a first threshold;
suspend communication with the source cell in the first communication system; and
be handed over to the target cell in the first communication system.

37. The apparatus according to claim 36, wherein the transceiver module is further configured to:
send indication information to the source cell in the first communication system, wherein the indication information indicates that communication with the source cell has been suspended or is about to be suspended.

38. The apparatus according to claim 35, wherein the communication module is further configured to:
determine that no response message is received within first duration after the request message is sent or that signal quality of the source cell in the first communication system is lower than a first threshold; and
perform the DAPS handover in the first communication system, and interrupt data transmission on a first resource in the second communication system during execution of the DAPS handover in the first communication system, wherein a resource conflict exists between the data transmission on the first resource in the second communication system and the DAPS handover in the first communication system.

39. The apparatus according to any one of claims 35 to 38, wherein the request message is a media access control MAC control element CE or a physical layer message.

40. The apparatus according to any one of claims 35 to 39, wherein a resource conflict exists between the DAPS handover in the first communication system and a service of a primary cell in the second communication system, and the cell identifier corresponding to the scheduling interval is a primary cell identifier in the second communication system;
a resource conflict exists between the DAPS handover in the first communication system and a service of a first secondary cell or a first secondary cell group in the second communication system, and the cell identifier corresponding to the scheduling interval is a first secondary cell identifier or a first secondary cell group identifier in the second communication system; and/or
a resource conflict exists between the DAPS handover in the first communication system and a service that is in a first band and that is in the second communication system, and the band identifier corresponding to the scheduling interval is an identifier of the first band.

41. The apparatus according to any one of claims 35 to 40, wherein the purpose of requesting the scheduling interval is to perform the DAPS handover in the first communication system.

42. A communication apparatus, wherein the apparatus comprises:
a processing module, configured to determine that a first event occurs; and
a transceiver module, configured to send indication information in a first communication system, wherein
the indication information is used to update a dual active protocol stack DAPS capability of a terminal device in the first communication system, and the indication information is effective for any band combination of the terminal device, or the indication information is effective for a first band in a first band combination; and
the terminal device supports communication in the first communication system and a second communication system, the first communication system corresponds to a first user identity, and the second communication system corresponds to a second user identity.

43. The apparatus according to claim 42, wherein the indication information further indicates that the indication information is effective for intra-frequency DAPS handover and/or for inter-frequency DAPS handover.

44. The apparatus according to claim 42 or 43, wherein the indication information indicates to suspend the DAPS capability in the first communication system; and
the first event is that the communication apparatus enters a radio resource control RRC connected state in both the first communication system and the second communication system; the first event is that a version of a network protocol of the first communication system and a version of a network protocol of the second communication system each are not earlier than a version of a 5G protocol; or the first event is that an RRC configuration in the first communication system and an RRC configuration in the second communication system exceed a baseband capability and/or a radio frequency capability of the terminal device.

45. The apparatus according to claim 42 or 43, wherein the indication information indicates to resume the DAPS capability in the first communication system; and
the first event is that the communication apparatus leaves an RRC connected state in the first communication system and/or the second communication system; the first event is that a version of a network protocol of the first communication system and/or a version of a network protocol of the second communication system are/is earlier than a version of a 5G protocol; or the first event is that a capability available for the first communication system supports DAPS handover between a source cell and a target cell in the first communication system.

46. A communication apparatus, wherein the apparatus comprises:
a transceiver module, configured to: receive a first message in a first communication system, wherein the first message indicates a terminal device to perform first dual active protocol stack DAPS handover between a first source cell and a first target cell in the first communication system, and the first communication system corresponds to a first user identity; and
receive a second message in a second communication system, wherein the second message indicates the terminal device to perform second DAPS handover between a second source cell and a second target cell in the second communication system, and the second communication system corresponds to a second user identity; and
a processing module, configured to perform the first DAPS handover in the first communication system and/or the second DAPS handover in the second communication system according to at least one of the following: a capability of the terminal device, a service in the first communication system and a service in the second communication system, or receiving time of the first message and receiving time of the second message.

47. The apparatus according to claim 46, wherein the processing module is specifically configured to:
determine that a priority of the first DAPS handover in the first communication system is higher than a priority of the second DAPS handover in the second communication system according to at least one of the following: the capability of the terminal device, the service in the first communication system and the service in the second communication system, or the receiving time of the first message and the receiving time of the second message;
perform the first DAPS handover in the first communication system; and
perform the second DAPS handover in the second communication system after performing the first DAPS handover.

48. The apparatus according to claim 46, wherein the processing module is specifically configured to:
determine that a priority of the first DAPS handover in the first communication system is higher than a priority of the second DAPS handover in the second communication system according to at least one of the following: the capability of the terminal device, the service in the first communication system and the service in the second communication system, or the receiving time of the first message and the receiving time of the second message;
perform the first DAPS handover in the first communication system;
suspend communication with the second source cell in the second communication system; and
be handed over to the second target cell in the second communication system.

49. The apparatus according to claim 46, wherein the processing module is specifically configured to:
determine that at least one of the following is satisfied: the receiving time of the first message and the receiving time of the second message satisfy a preset relationship, a priority of the service in the first communication system is higher than a priority of the service in the second communication system, or a latency requirement of the service in the first communication system is higher than a latency requirement of the service in the second communication system; and
determine that a priority of the first DAPS handover in the first communication system is higher than a priority of the second DAPS handover in the second communication system.

50. The apparatus according to claim 49, wherein the preset relationship is: the receiving time of the first message is earlier than the receiving time of the second message; or the receiving time of the second message is earlier than the receiving time of the first message.

51. A computer-readable storage medium, wherein the computer-readable storage medium is configured to store computer instructions, and when the computer instructions are run on a computer, the computer performs the method according to any one of claims 1 to 25.
